# EUROPÄISCHE PATENTSCHRIFT

(11) **EP 1 644 539 B1**
(45) Veröffentlichungstag und Bekanntmachung des Hinweises auf die Patenterteilung: **21.08.2013**
(21) Anmeldenummer: 04799033.8
(22) Anmeldetag: 15.11.2004
(51) Int. Cl.: C14C 11/00, C09D 175/06, D06N 3/14, B32B 5/18, B32B 9/04, B32B 27/06, B32B 27/40, B32B 3/26

(54) **MIT EINER ZURICHTUNG VERSEHENER TRÄGER**
SUBSTRATE PROVIDED WITH A DRESSING
SUBSTRAT POURVU D'UN APPRET

(30) Priorität: 15.11.2003 DE 20317670 U; 24.11.2003 AT 83003 U; 22.12.2003 AT 91803 U; 02.03.2004 AT 3402004; 07.06.2004 AT 40404 U; 13.07.2004 AT 49104 U
(43) Veröffentlichungstag der Anmeldung: 12.04.2006
(73) Patentinhaber: BASF SE, 67056 Ludwigshafen (DE)
(72) Erfinder: Schaefer, Philipp, 30519 Hannoer (DE)
(86) Internationale Anmeldenummer: PCT/IB2004/003986
(87) Internationale Veröffentlichungsnummer: WO 2005/047549

(56) Entgegenhaltungen:
- DE-U1- 20 117 724
- DE-U1- 29 903 664
- PATENT ABSTRACTS OF JAPAN Bd. 013, Nr. 331 (C-622), 25. Juli 1989 (1989-07-25) & JP 01 111077 A (ACHILLES CORP), 27. April 1989 (1989-04-27)

## Beschreibung

Die Erfindung betrifft einen an ihrer Sichtseite mit einer eine Narbenstruktur aufweisenden Zurichtung versehenen, eine veloursartige, feinfaserige Oberseite aufweisenden Träger, insbesondere ein Narbenleder mit einer die Oberseite bildenden geschliffenen Narbenseite, ein Spaltleder mit geschliffener Oberseite oder ein synthetisches Veloursmaterial mit einer aus Mikrofasern bestehenden Oberseite, wobei die Zurichtung aus einer verfestigten, Polyurethan enthaltenden, vernetzten Kunststoffdispersion gebildete Verbindungsschicht (12), welche auf der Oberseite des Trägers (7) aufgebracht ist, mit diesem verbunden ist, dadurch gekennzeichnet, dass die Zurichtung (1) über ihre gesamte Dicke durchgehende Kapillaren (11) aufweist und sowohl im Bereich der Narbkuppen (6) als auch im Bereich der Narbtäler (8) im Wesentlichen dieselbe Dicke (d) besitzt und über eine einzige dünne Verbindungsschicht (12) mit dem Träger (7) verbunden ist und wobei die Zurichtung (1) aus einer Kombination einer verfestigten, einen Vernetzer enthaltenden Polyurethandispersion mit einem hohen Erweichungspunkt und einer verfestigten, einen Vernetzer enthaltenden Polyurethandispersion mit einem niedrigen Erweichungspunkt, die vor dem Vernetzen thermoplastisch ist, besteht und weiterhin geschlossene Zellen bildende Mikrohohlkugeln mit einem Durchmesser von weniger als 21 µm enthalten kann und/oder auf ihrer Sichtseite Wachse und/oder Silikone umfassen kann. Unter dem Begriff "Narbenstruktur" soll auch eine nubukartige Ausbildung der Sichtseite der Zurichtung verstanden werden.

Vollnarbige Leder, sogenannte Anilinleder, welche lediglich gefärbt sind, jedoch an ihrer Narbenseite keine Zurichtung besitzen, weisen in erwünschter Weise eine besonders hohe Luft- und Wasserdampfdurchlässigkeit auf, jedoch ist bei diesen Ledern die Narbenseite nicht abriebfest, kratzfest, lichtecht und verschmutzungsunempfindlich, so dass diese Leder für die Innenausstattung von Fahrzeugen und für die Herstellung von Schuhen nicht verwendbar sind.

Man hat daher bereits vorgeschlagen, die Oberseite eines Leders, und zwar insbesondere eines an seiner Narbenseite angeschliffenen Narbenleders, aber auch eines Spaltleders, sowie eines synthetischen Velourmateriales, mit einer eine Narbenstruktur aufweisenden Zurichtung zu versehen, damit die Sichtseite derselben die erforderlichen Eigenschaften aufweist und ein lederähnliches Aussehen besitzt.

Bei einem bekannten Verfahren wird die Zurichtung zunächst gesondert auf einer Unterlage aus Silikonkautschuk hergestellt, wobei die Unterlage eine der Narbenstruktur der Zurichtung entsprechende strukturierte Oberfläche aufweist. Bei der Herstellung dieser Zurichtung wird zunächst eine Kunststoffdispersion, die maximal 60 Gew.-%, in der Regel 40 Gew.-% Feststoffanteile, enthält, durch Rakeln, Spritzen, Walzenauftrag oder Gießen auf die strukturierte Oberfläche der Unterlage aufgetragen und durch Wärmezufuhr verfestigen gelassen. Die nasse Kunststoffdispersion weist unmittelbar nach dem Auftragen eine glatte Oberfläche auf, beim Verfestigen schrumpft jedoch der von dieser Kunststoffdispersion gebildete Film durch den Wasserentzug, wobei die Dispersion in die Täler der Struktur der Unterlage absackt, und an den Spitzen der Struktur nur eine sehr dünne oder unter Umständen sogar eine nicht zusammenhängende Schicht der Zurichtung entsteht, insbesondere dann, wenn die Zurichtung eine formschöne, tiefe Narbung aufweisen soll und daher die Unterlage eine entsprechende, stark ausgeprägte Struktur besitzt.

Dieser Nachteil tritt vor allem auch deshalb auf, da auf die Unterlage, insbesondere bei einer stark ausgeprägten Struktur derselben, nur eine dünne Dispersionsschicht aufgetragen werden kann, da sonst Probleme bei der Trocknung auftreten, wobei es insbesondere in den Narbtälem der strukturierten Unterlage zur Blasenbildung und zum Reißen der Zurichtung kommt.

Eine weitere Schwierigkeit bei der Herstellung der Zurichtung auf einer strukturierten Unterlage besteht darin, dass die in der Regel hierfür verwendete, Polyurethan enthaltende wässerige Kunststoffdispersionen mit einem Feststoffanteil von mehr als 50 Gew.-% nicht auf dem Markt erhältlich ist und der geringe Feststoffanteil der handelsüblichen Dispersionen beim Trocknen ein starken Schrumpfen bewirkt.

Wird eine nach einem solchen bekannten Verfahren gesondert hergestellte Zurichtung von der Unterlage aus Silikonkautschuk abgelöst, so bildet die der strukturierten Oberfläche derselben zugewendete Seite die Sichtseite der Zurichtung, sodass dann die Narbtäler der Zurichtung nur eine sehr geringe Dicke aufweisen, wodurch in der Zurichtung durch Einkerbungen Sollbruchstellen entstehen, die insbesondere dann, wenn das mit einer solchen Zurichtung versehene Leder Biegungen oder Spannungen ausgesetzt ist, sichtbare Beschädigungen der Zurichtung zur Folge haben. Dies ist in der Regel dann der Fall, wenn das mit einer solchen Zurichtung versehene Leder für die Herstellung von Innenausstattungen von Kraftfahrzeugen und von Sitzpolstem, aber auch als Schuhmaterial, Verwendung findet.

Um diesen Nachteil zu vermeiden, war es bisher immer erforderlich, zwischen der Zurichtung und der Oberfläche des Leders zumindest eine Schicht, in der Regel mehrere Schichten zum Ausgleich vorzusehen. So wurde bereits vorgeschlagen, um den Schrumpfverlust des Dispersionserstauftrages auszugleichen, eine dicke Ausgleichsschicht vorzusehen, welche gleichzeitig als Verbindungsschicht dient.

Häufig kommt es dabei zu Haftungsproblemen zwischen den einzelnen Schichten, sodass ein zumindest teilweises Ablösen der Schichten erfolgt.

Ein wesentlicher Nachteil der bekannten, mit einer Zurichtung versehenen Leder, insbesondere dann, wenn zumindest eine Ausgleichsschicht vorgesehen ist, besteht darin, dass die erforderliche Luft- und Wasserdampfdurchlässigkeit nicht vorhanden ist, da die Ausgleichsschicht die in der dünnen Zurichtung eventuell vorhandenen Poren oder offenen Zellen verschließt. Dadurch wird die Atmungsaktivität des mit der Zurichtung versehenen Leders negativ beeinflusst. Insbesondere bei einem Leder mit einer eine grobe Narbenstruktur aufweisenden Zurichtung müssen aber für die Verbindung mit dem Leder sehr dicke Ausgleichsschichten vorgesehen sein, welche die Eigenschaften des Leders in ungünstiger Weise beeinflussen.

So ist es beispielsweise aus der US-A 4,923,732 bekannt, die Zurichtung über eine dicke Ausgleichsschicht mit der Lederoberfläche zu verbinden .

Die US-A 4,751,116 und die US-A 6,177,148 zeigen gleichfalls ein Leder, bei dem die Zurichtung über mehrere Schichten mit dem Leder verbunden ist. Eine der Verbindungsschichten dringt dabei in die Poren der Zurichtung ein und kleidet sie aus, wodurch die Wasserdampfdurchlässigkeit stark reduziert wird und eine Luftdurchlässigkeit in der Praxis nicht vorhanden ist. Man hat aus diesem Grund vorgeschlagen, das zugerichtete Leder mechanisch zu perforieren. Solche mechanisch hergestellte Perforationen schwächen jedoch das Leder und führen zu einer Verschmutzung der Oberfläche.

Es sind auch Träger bekannt, deren Zurichtung gesondert durch Auftragen einer Polyurethan sowie einen Vernetzer enthaltenden Dispersion auf einer warmen Unterlage hergestellt werden. Das Auftragen erfolgt bei den bekannten Verfahren durch Rakeln, Gießen oder mittels Walzen, wobei keine gleichmäßig dicke, filmartige Zurichtung erzeugt werden kann. Auch beim Aufbringen mittels eines bekannten Sprühverfahrens lassen sich solche dünnen Filme nicht herstellen, da hierbei zur Erzielung der Narbenstruktur größere Menge aufgebracht werden müssen, was zur Bildung von Filmen unterschiedlicher Dicke in den Narbkuppen und Narbtälem führt,

Die vorliegende Erfindung hat sich zur Aufgabe gestellt, die erwähnten Nachteile zu vermeiden und einen mit einer Zurichtung versehenen Träger der eingangs beschriebenen Art zu schaffen, welcher die erforderlichen Eigenschaften hinsichtlich seiner Weichheit, Geschmeidigkeit, Abriebfestigkeit, vor allem auch die für den Komfort erforderliche Luft- und Wasserdampfdurchlässigkeit aufweist, und dessen Zurichtung aus einer wässerigen, also lösungsmittelfreien Kunststoffdispersion herstellbar ist. Ferner ist es Aufgabe der Erfindung, zu vermeiden, dass Kunstleder mit einer aus Polymerlösungen gebildeten Zurichtung und Kunstleder mit koagulierten Zurichtungen immer mit einem Rakel auf die strukturierte Unterlage gebracht werden müssen, wobei für diese Zurichtungen die Nachteile der unterschiedlichen Dicke besonders zutreffen. Insbesondere eine aus koagulierten Polyurethanen bestehende Zurichtung wird, wenn sie mit einer brennenden Zigarette in Berührung kommt, an ihrer Oberfläche beschädigt. Außerdem sind derartige Zurichtungen nicht lösungsmittelbeständig.

Zur Lösung dieser Aufgabe schlägt die Erfindung vor, dass die Zurichtung über ihre gesamte Dicke durchgehende Kapillaren aufweist und sowohl im Bereich der Narbkuppen als auch im Bereich der Narbtäler im wesentlichen dieselbe Dicke besitzt, und über eine einzige dünne Verbindungsschicht mit dem Träger verbunden ist. Durch die Anordnung der durchgehenden Kapillaren sowohl im Bereich der Narbkuppen als auch im Bereich der Narbtäler wird dann, wenn lediglich eine einzige dünne Verbindungsschicht vorgesehen ist, die erforderliche Luft- und Wasserdampfdurchlässigkeit wesentlich verbessert, wobei gleichzeitig sichergestellt ist, dass die überall im wesentlichen dieselbe Dicke aufweisende Zurichtung keine Schwachstellen aufweist und an allen Stellen die gleiche Festigkeit besitzt, sodass auch bei Biege- und Zugbeanspruchungen des Trägers keine Beschädigung der Zurichtung erfolgt . Eine mechanische Perforation des mit der Zurichtung versehenen Trägers, welche zu einer Schwächung des Trägers führt, zwecks Erzielung der gewünschten Luft- und Wasserdampfdurchlässigkeit ist somit bei der erfindungsgemäßen Ausbildung des Trägers nicht erforderlich.

Ein weiterer Vorteil besteht darin, dass auch sogenannte "low water absorption-Leder" in der erfindungsgemäßen Weise zugerichtet werden können, wobei diese Leder zwar atmen, also luft- und wasserdampfdurchlässig sind, aber bei einem großen Wasserangebot, wie beispielsweise Regen, das Wasser, im Gegensatz zu mechanisch perforierten Ledern, nicht durch das Leder hindurchdringen kann.

Zweckmäßig weisen die Kapillaren einen unterschiedlichen Querschnitt mit einem Durchmesser zwischen 0,005 mm und 0,05 mm, vorzugsweise zwischen 0,009 mm und 0,02 mm auf, wobei sich optimale Bedingungen ergeben, wenn auf einer Fläche von 100 cm² mindestens 100 Kapillaren, vorzugsweise mindestens 250 Kapillaren vorgesehen sind und diese im wesentlichen geradlinig verlaufen.

Gemäß einer bevorzugten Ausführungsform der Erfindung sind die Kapillaren in der Zurichtung unregelmäßig verteilt, so dass die Sichtseite der Zurichtung das Aussehen der Porenstruktur einer natürlichen Haut aufweist.

Eine optimale Luft- und Wasserdampfdurchlässigkeit ist dann gewährleistet, wenn gemäß einem weiteren Merkmal der Erfindung die Verbindungsschicht Unterbrechungen oder Schwachstellen verringerter Dicke aufweist. Dadurch wird gewährleistet, dass Luft und Wasserdampf durch die durchgehenden Poren, die von den Kapillaren in der Zurichtung und von den mit diesen Kapillaren kommunizierenden Unterbrechungen in der Verbindungsschicht gebildet sind, praktisch ungehindert hindurchdringen kann und so beispielsweise bei Verwendung des Trägers für Schuhe auftretender Fußschweiß vom Träger selbst aufgenommen und über die Verbindungsschicht und die Zurichtung abgeleitet wird. Bei Verwendung des erfindungsgemäßen Trägers für Polstermöbel wird auftretende Feuchtigkeit über die Zurichtung und die Verbindungsschicht zum Träger transportiert und von diesem aufgenommen. Selbst bei hydrophobierten Ledern mit einer Stärke von mehr als 2 mm wird bei der erfindungsgemäßen Ausbildung eine Wasserdampfdurchlässigkeit von mehr als 1,5 mg/cm².h nach DIN 53333 erreicht.

Die erwähnten durchgehenden Poren können dadurch sichtbar gemacht werden, dass man ein farbiges Kontrastmittel auf die Oberfläche der Zurichtung aufträgt und in die Poren einziehen lässt, und nach Trocknung Schnittaufnahmen vom mit der Zurichtung versehenen Träger macht.

Die Unterbrechungen oder Schwachstellen in der Verbindungsschicht werden vorzugsweise dadurch erzielt, dass die Verbindungsschicht lediglich partiell auf der Oberfläche des Trägers angeordnet ist, sodass keine zusammenhängende Schicht gebildet wird. Es hat sich gezeigt, dass auch in diesem Fall eine hinreichende Verbindung zwischen dem Träger und der Zurichtung gegeben ist, wobei eine sehr hohe Luft- und Wasserdampfdurchlässigkeit gewährleistet ist. Außerdem wird dadurch auch die gewünschte Weichheit und eine extrem hohe Abriebfestigkeit erzielt, sodass die insbesondere in der Fahrzeugindustrie für die Innenausstattung notwendigen Parameter erfüllt sind, wobei dennoch eine gute Haftung zwischen der Zurichtung und dem Träger sichergestellt ist.

Gemäß einer bevorzugten Ausführungsform der Erfindung weist die Verbindungsschicht eine punkt-, raster- oder gitterartige, also netzartige Struktur auf, so dass Unterbrechungen vorhanden sind und keine vollflächige, biegesteife Sandwichbauweise gegeben ist, welche die Luft- und Wasserdampfdurchlässigkeit, aber auch die Biegefähigkeit ungünstig beeinflusst. In gewissen Fällen genügt es aber zur Verbesserung der erwähnten Eigenschaften auch, wenn die Verbindungsschicht eine maximale Dicke zwischen 0,01 mm und 0,05 mm und an ihren Schwachstellen eine Dicke zwischen 0,002 mm und 0,01 mm aufweist, in welchem Fall eine gute Luft- und Wasserdampfdurchlässigkeit über diese dünnen Schwachstellen erzielt wird und durch welche auch die Biegefähigkeit und die Flächenhaftung des Leders wesentlich verbessert werden.

Ist die Oberseite des Trägers faserig, insbesondere feinfaserig ausgebildet, so ist es von Vorteil, wenn die Verbindungsschicht überwiegend im Bereich der Faserspitzen angeordnet ist, sodass zwischen diesen Faserspitzen bei Belastung des mit einer solchen Zurichtung versehenen Trägers einen Pumpeffekt bewirkende Hohlräume freigehalten sind. Es hat sich gezeigt, dass in diesem Fall eine hinreichende Verbindung zwischen der faserigen Oberfläche des Trägers und der Zurichtung erzielt wird, wobei die erforderliche hohe Luft- und Wasserdampfdurchlässigkeit, insbesondere auch durch den erwähnten Pumpeffekt, gewährleistet ist. Dieser Pumpeffekt bewirkt, dass bei Ausübung eines Druckes auf die Zurichtung, beispielsweise durch das Sitzen auf einem mit einem zugerichteten Träger versehenen Sitz, die Zurichtung zusammengedrückt wird, und bei einer Druckentlastung der Zurichtung eine Sogwirkung entsteht, wodurch auftretende Feuchtigkeit rasch vom Träger absorbiert wird. Dadurch, dass die Oberseite des Trägers zur Erzielung einer hohen Luft- und Wasserdampfdurchlässigkeit in Verbindung mit dem Pumpeffekt geschliffen werden muss, ergibt sich bei Verwendung von Ledern mit Oberflächenfehlern als Träger auch der Vorteil, dass diese beim zugerichteten Leder nicht mehr sichtbar sind.

Zweckmäßig ist es, wenn die Verbindungsschicht aus einer verfestigten, Polyurethan enthaltenden vernetzten Kunststoffdispersion, insbesondere aus einer verfestigten Polyester-Polyurethan-Dispersion besteht. Vorteilhaft ist es dabei, wenn die Polyurethan enthaltende Dispersion zumindest teilweise eine kristalline oder eine teilkristalline Struktur aufweist. Nach ihrer Verfestigung, jedoch vor ihrer Vernetzung ist die aus einer solchen Dispersion bestehende Verbindungsschicht thermoplastisch und hat einen sehr niedrigen Erweichungspunkt, vor allem, wenn sie noch zwischen 2% und 10% Wasser enthält, sich aber dabei schon trocken anfühlt. Eine derartige Verbindungsschicht gewährleistet einerseits eine gute Verbindung zwischen der Trägeroberseite und der Zurichtung, stellt jedoch auch sicher, dass sie nicht tief in die Zwischenräume zwischen den Fasern bzw. Faserbüscheln an der Trägeroberseite eindringt und diese verhärtet, und ist, wenn sie vernetzt ist, hitzebeständig.

Vorteilhaft für eine gute Verbindung ist es, wenn die Kunststoffdispersion klebrig wirkende Zusätze, beispielsweise weiche Harze oder weiche Polymere, insbesondere Acrylate, enthält, durch welche die Klebewirkung einer bereits teilweise verfestigten Dispersion verbessert wird.

Gemäß einem weiteren Merkmal der Erfindung kann die Kunststoffdispersion Mikrohohlkugeln mit einem Durchmesser von weniger als 21 µm enthalten, die an der Oberseite des Trägers kleine, im Inneren ein Gas enthaltende Tröpfchen bilden, und so ein weiteres Eindringen der aufgebrachten Kunststoffdispersion in den Träger verhindern.

Es hat sich als günstig erwiesen, wenn die Verbindungsschicht ein Flächengewicht zwischen 20 g/m² und 90 g/m² aufweist. Bei Trägern mit einer nicht geschliffenen oder nur fein angeschliffenen Oberseite beträgt das Flächengewicht zweckmäßig zwischen 20 g/m² und 45 g/m², bei Trägem mit tief geschliffener Oberseite und bei Spaltledern zweckmäßig zwischen 45 g/m² und 90 g/m².

Optimale Werte hinsichtlich der Luft- und Wasserdampfdurchlässigkeit werden dann erzielt, wenn die Zurichtung in allen Querschnittsbereichen nicht nur im wesentlichen dieselbe Dicke, sondern auch annähernd die gleiche Struktur und die gleiche Dichte aufweist und somit an allen Stellen die gleiche Festigkeit besitzt und keine Schwachstellen vorhanden sind, die bei Biegungen und Spannungen des mit der Zurichtung versehenen Trägers zu einer Beschädigung der Zurichtung führen.

Die Zurichtung besteht aus einer Kombination einer verfestigten, einen Vernetzer enthaltenden Polyurethandispersion mit einem hohen Erweichungspunkt, und einer verfestigten, einen Vernetzer enthaltenden Polyurethandispersion mit vorzugsweise kristalliner oder teilkristalliner Struktur mit einem niedrigen Erweichungspunkt, welche Dispersion vor dem Vernetzen thermoplastisch ist. Durch die kombinierte Verwendung einer Polyurethandispersion, die bereits vor der Vernetzung zu temperaturbeständigen Filmen mit elastomeren Eigenschaften führt, mit einer thermoplastischen Polyurethandispersion mit vorzugsweise kristalliner oder teilkristalliner Struktur, wie sie als Rohstoff für Klebstoffe Verwendung findet, lassen sich die gewünschten Eigenschaften in optimaler Weise erzielen.

Gemäß einem weiteren Merkmal der Erfindung kann die Zurichtung geschlossene Zellen bildende Mikrohohlkugeln mit einem Durchmesser von weniger als 21 µm enthalten.

Die Zurichtung weist im Gegensatz zu bekannten Zurichtungen keine Schaumstruktur auf, welche Flüssigkeit in unerwünschter Weise speichert, sondern die Luft- und Wasserdampfdurchlässigkeit wird durch die durchgehenden Kapillaren bewirkt.

Um die Verschmutzbarkeit der Zurichtung, insbesondere bei hellen Farben, zu vermeiden bzw. zu reduzieren, können gemäß einem weiteren Merkmal der Erfindung die Narbkuppen der Zurichtung mikroskopisch kleine glatte Erhöhungen aufweisen. Die Erfindung ermöglicht es aber auch, der Sichtseite der Zurichtung eine Nubukstruktur zu verleihen, aus welcher feine Haare herausragen, welche ebenfalls kleine Erhöhungen bilden. Die Erhöhungen weisen zweckmäßig einen Durchmesser zwischen 3 µm und 60 µm, vorzugsweise zwischen 5 µm und 15 µm, sowie eine maximale Länge von 110 µm auf, und sind dicht an dicht angeordnet. Diese Erhöhungen, welche das Aussehen von feinen Haaren haben können, bewirken, dass insbesondere Nassverschmutzungen auf der glatten Oberfläche dieser Erhöhungen bleiben und nicht in Mikrozwischenräume zwischen den Narbkuppen oder in der Nubukstruktur absacken, und verhindern somit, dass sich der Schmutz vollflächig an der Oberfläche der Zurichtung festsetzt.

Der positive Effekt wird weiters verbessert, wenn die Zurichtung an ihrer Sichtseite Wachse und/oder Silikone enthält, durch welche die Oberflächenspannung der Zurichtung gegenüber Wasser verändert wird.

Weiters kann erfindungsgemäß die Sichtseite der Zurichtung mit einem sehr dünnen Finish versehen sein, welcher die Luft- und Wasserdampfdurchlässigkeit nicht beeinträchtigt, durch welchen aber der Griff sowie der Glanzgrad beeinflusst werden können.

Eine eventuell vorhandene polymere Imprägnierung, die in einem als Träger verwendeten Leder eingezogen ist und zur Schleifstaubbindung und Narbverfestigung dient, hat keinen Einfluss auf die Luft- und Wasserdampfdurchlässigkeit und bleibt hier unberücksichtigt.

Um dem zugerichteten Träger mehr Volumen zu verleihen, und um seine Sichtseite griffsympathisch zu gestalten, kann erfindungsgemäß an der der Oberseite gegenüberliegenden Seite des Trägers, insbesondere der Fleischseite eines als Träger verwendeten Leders, ein stark gerautes synthetisches Gewebe oder Gewirke mit abstehenden Fasern vorgesehen sein, welches vorzugsweise ein Flächengewicht von mehr als 250 g/m² aufweist. Die Klebeverbindung dieses Gewebes oder Gewirkes mit dem Träger erfolgt derart, dass nur eine Klebewirkung zwischen den Fasern hergestellt wird. Dieses Gewebe oder Gewirke kann durch eine dünne Beschichtung abgedeckt sein.

Tierische Haut, aus welcher Leder hergestellt wird, ist ein teures Gut, so dass diese Haut optimal genutzt werden soll. Erfolgt die Bildung der Zurichtung auf dem gesamten aus einer solchen tierischen Haut hergestellten Leder gleichzeitig in einem einheitlichen Arbeitsvorgang, so entsteht bei der Weiterverwendung in Folge der unterschiedlichen Beschaffenheit der Haut in den einzelnen Bereichen eine beträchtliche Menge an Abfall. Um diesen Abfall weitgehend zu vermeiden, und um eine optimale Ausnutzung der Lederhart sicherzustellen, ist es erfindungsgemäß von Vorteil, wenn aus dieser Haut Formatzuschnitte herausgetrennt werden, wobei bei einem Formatzuschnitt im Flanken- oder Bauchbereich die Zurichtung eine stark ausgeprägte Narbenstruktur und im Kernbereich die Zurichtung eine flachen Narbenstruktur aufweist.

Das erfindungsgemäße Verfahren zur Herstellung eines an seiner Sichtseite mit einer Narbenstruktur aufweisenden Zurichtung versehenen Trägers, insbesondere eines Narbenleders, eines Spaltleders mit geschliffener Oberseite oder eines synthetischen Veloursmateflales mit einer aus Mikrofasern bestehenden Oberseite, besteht im Wesentlichen darin, dass man zunächst zur Bildung der Zurichtung eine wässerige Kunststoffdispersion, die aus einer Kombination einer einen Vernetzer enthaltenden Polyurethandispersion mit einem hohen Erweichungspunkt und einer einen Vernetzer enthaltenden Polyurethandispersion mit einem niedrigen Erweichungspunkt besteht und weiterhin geschlossene Zellen bildende Mikrohohlkugeln mit einem Durchmesser von weniger als 21 µm enthalten kann und/oder auf ihrer Sichtseite Wachse und/oder Silikone umfassen kann, auf eine aus Silikonkautschuk bestehende Unterlage aufbringt, welche eine der Narbenstruktur der Zurichtung entsprechende strukturierte Oberfläche aufweist, und zu einem Film verfestigen lässt, weiters trägt man auf die Oberseite des Trägers eine eine Verbindungsschicht bildende Kunststoffdispersion auf, und weiters unterzieht man den Träger mit dieser Oberseite auf den Film aufgelegt und einer Druck- und Wärmebehandlung, wobei die eine lösungsmittelfreie, Polyurethan sowie einen Vernetzer enthaltende Kunststoffdispersion auf die eine gleichmäßige Temperatur von weniger als 105° C aufweisenden Unterlage derart aufgetragen wird, dass sich diese Kunststoffdispersion beim Auftreffen auf die Unterlage sofort verfestigt und nach Wasserverdampfung ein gleichmäßig dicker, eine Netzstruktur aufweisender Film mit einer Dicke von weniger als 0,04 mm gebildet wird. Auf diese Weise wird auf der Unterlage eine dünne Zurichtung hergestellt, die überall gleich dick ist und die über ihre gesamte Dicke durchgehende Kapillaren aufweist.

Die Kunststoffdispersion besteht aus einer Kombination einer einen Vernetzer enthaltenden Polyurethandispersion mit einem hohen Erweichungspunkt, und einer einen Vernetzer enthaltenden Polyurethandispersion mit vorzugsweise kristalliner oder teilkristalliner Struktur mit einem niedrigen Erweichungspunkt, welche Dispersion vor dem Vernetzen thermoplastisch ist.

Das Auftragen der Kunststoffdispersion auf die Unterlage erfolgt mittels eines durch einen kleinen Durchmesser aufweisende Sprühdüsen erzeugten feinen Sprühnebels in einer solchen geringen Menge, dass der Kunststoffdispersion bereits auf dem Weg zur erwärmten Unterlage Wasser entzogen wird und sich diese Kunststoffdispersion jedenfalls sofort beim Auftreffen auf diese Unterlage zumindest soweit verfestigt, dass die Kunststoffdispersion nicht in die Narbtäler der strukturierten Unterlage absacken kann, sondern vielmehr an allen Stellen einen gleich dicken, netzartigen Film bildet, wodurch die erwähnten Kapillaren entstehen.

Die strukturierte Oberfläche der Unterlage wird vorzugsweise durch Abformen der Narbenstruktur eines Naturleders hergestellt.

Insbesondere dann, wenn die Oberfläche der Zurichtung einen Veloureffekt aufweisen soll, ist es aber auch möglich, die strukturierte Oberfläche der Unterlage durch Laserbehandlung herzustellen, so dass auf der Oberfläche der Unterlage eine Struktur mit feinsten Härchen entsteht. Die durch die Laserbehandlung hergestellte strukturierte Oberfläche der Zurichtung kann in der Folge über eine Mutter vervielfältigt werden.

Vorzugsweise wird eine aus additionsvernetztem Silikonkautschuk bestehende Unterlage mit einer Shorehärte zwischen 25 Shore A und 70 Shore A verwendet. Eine derartige Unterlage ist in gewünschter Weise druckelastisch, sodass bei der abschließenden Druck- und Wärmebehandlung das Narbenbild nicht zerstört wird. Außerdem entstehen bei der Laserbehandlung von additionsvemetztem Silikonkautschuk keine die Abformung erschwerenden freien Radikale, so dass im Silikonkautschuk Vertiefungen gebildet werden können, welche später an der Zurichtung das Aussehen von feinsten Härchen oder feinsten Faserbüscheln haben und zu einem Nubukeffekt führen.

Zweckmässig besteht die Unterlage aus einem wärmeleitfähigen Silikonkautschuk mit einer Dichte von mehr als 110 g/cm², vorzugsweise von mehr als 120 g/cm² und weist somit eine gute Wärmeleitfähigkeit auf, was für eine gleichmäßige Erwärmung während des Sprühauftrages der Kunststoffdispersion erforderlich ist. Zur Erhöhung der Wärmeleitfähigkeit können in der Unterlage anorganische Füllstoffe eingebettet sein. Vorzugsweise weist die Unterlage eine Dicke zwischen 1 mm und 3 mm auf und ist mit einer wärmeleitfähigen, vorzugsweise aus Aluminium bestehenden Abstützung verbunden, welche eine Dicke zwischen 1 mm und 3 mm aufweisen kann. Diese wärmeleitfähige Abstützung sichert eine gleichmäßige Wärmeverteilung auf der Unterlage.

Die Verbindung der Unterlage mit der wärmeleitfähigen Abstützung erfolgt erfindungsgemäß mittels eines Einkomponentenklebers, in dem ein dünnes Vliesmaterial aus synthetischen Fasern mit einem Flächengewicht von weniger als 150 g/m² eingebettet sein kann. Durch diese Einbettung wird die Wärmeleitfähigkeit nicht behindert, jedoch die Wärmeausdehnung des Silikonkautschuks stark eingeschränkt.

Zur Bildung der Verbindungsschicht wird erfindungsgemäß auf die Oberseite des Trägers eine Kunststoffdispersion aufgebracht, die im wesentlichen aus einer Polyurethandispersion mit einem niedrigen Erweichungspunkt und vorzugsweise kristalliner oder teilkristalliner Struktur und einem Vernetzer besteht, und zwar derart, dass sie sich beim Auftreffen auf die Oberseite des Trägers rasch verfestigt und eine nicht zusammenhängende Verbindungsschicht entsteht.. Es kann aber eine solche Kunststoffdispersion auch derart aufgebracht werden, dass eine Verbindungsschicht mit Schwachstellen verringerter Dicke entsteht. Das Aufbringen erfolgt dabei in gleicher Weise wie das Aufbringen der Kunststoffdispersion auf die Unterlage aus Silikonkautschuk zur Bildung der Zurichtung, wobei im vorliegenden Fall dadurch, dass der Dispersion beim Auftreffen auf der Oberseite des Trägers infolge der Wasseraufnahme durch den Träger Wasser entzogen wird, auf dieser Oberseite gleichfalls ein netzartiger Film gebildet wird wie beim Auftreffen der die Zurichtung bildenden Dispersion auf die warme Unterlage.

Falls das als Träger verwendete Leder hydrophobiert ist und daher wenig Wasser aufzunehmen im Stande ist, zu ist es zweckmäßig, das Leder vor dem Aufbringen der die Verbindungsschicht bildenden Dispersion zu erwärmen.

Für die die Verbindungsschicht bildende Dispersion können Komponenten verwendet werden, wie sie für die Herstellung von Klebstoffen bekannt sind.

Die auf die Oberseite des Trägers aufgetragene Kunststoffdispersion sollte grifftrocken sein, aber vorzugsweise noch Restfeuchtigkeit enthalten, bevor die mit dieser Kunststoffdispersion versehene Oberseite auf den auf der Unterlage angeordneten, weitgehend wasserfreien, die Netzstruktur aufweisenden Film aufgelegt wird, und die Vernetzung darf noch nicht stattgefunden haben.

Anschließend wird erfindungsgemäß der auf der Unterlage befindliche, eine Netzstruktur aufweisende, die Zurichtung bildende Film mit dem darauf aufgelegten, mit der die Verbindungsschicht bildenden Kunststoffdispersion versehenen Träger zwischen druckelastischen Platten bei einer Temperatur zwischen 60 °C und 105 °C und bei einem Druck von maximal 5 kg/cm² verpresst. Bei diesem unter Wärmeeinwirkung erfolgten Verpressen wird der auf dem Träger befindliche, die Verbindungsschicht bildende Film auf Grund seines niedrigen Erweichungspunktes weicher als der auf der Unterlage befindliche, die Zurichtung bildende Film, so dass die Kapillaren in der Zurichtung erhalten bleiben. Der die Verbindungsschicht bildende Film wird zwar klebrig, aber nicht flüssig, so dass die Kapillaren in der Zurichtung durch ihn nicht verschlossen werden und dieser Film nicht zusammenfließt, also seine Struktur beibehält und die Unterbrechungen in der Verbindungsschicht erhalten bleiben. Es wird somit sichergestellt, dass einerseits eine hinreichende Verbindung zwischen der Zurichtung und der Oberseite des Trägers erfolgt, andererseits die erforderliche Luft- und Wasserdampfdurchlässigkeit gewährleistet ist.

Zwecks vollständiger Trocknung und Vernetzung kann letztlich der mit der Zurichtung versehene Träger nach dem Verpressen in hängender Lage einer Resttrocknung unterzogen werden.

Anhand der Zeichnungen wird die Erfindung näher erläutert. Fig. 1 zeigt im Schnitt ein bekanntes Verfahren zur Herstellung einer Zurichtung auf einer aus Silikonkautschuk bestehenden Unterlage und Fig. 2 den Aufbau eines mit einer nach dem bekannten Verfahren hergestellten Zurichtung versehenen Leders im Schnitt. Fig. 3 zeigt im Schnitt ein erfindungsgemäß ausgebildetes, mit einer Zurichtung versehenes Leder und Fig. 4 in einer stark vergrößerten Darstellung einen Teilschnitt durch ein mit einer Zurichtung versehenes, erfindungsgemäßes Leder. Fig. 5 zeigt in stark vergrößertem Querschnitt eine Narbkuppe der Zurichtung. Fig. 6 stellt eine weitere Ausführungsform eines erfindungsgemäßen, mit einer Zurichtung versehenen Leders im Schnitt dar. Fig. 7 zeigt in stark vergrößerter Schnittdarstellung eine weitere Ausführungsform eines erfindungsgemäßen, mit einer Zurichtung versehenen Leders und Fig. 8, gleichfalls im Schnitt, ein mit einer Zurichtung versehenes, erfindungsgemäßes Leder, welches auf seiner Fleischseite mit einem synthetischen Gewebe oder Gewirke versehen ist. Fig. 9 stellt schematisch eine Vorrichtung zur Herstellung der Zurichtung auf einer Unterlage und Fig. 10 schematisch eine Vorrichtung zum Verbinden der Zurichtung mit der Oberseite des Leders dar. Fig. 11 zeigt fotografisch die Sichtseite der bei einem erfindungsgemäßen Leder vorgesehenen Zurichtung.

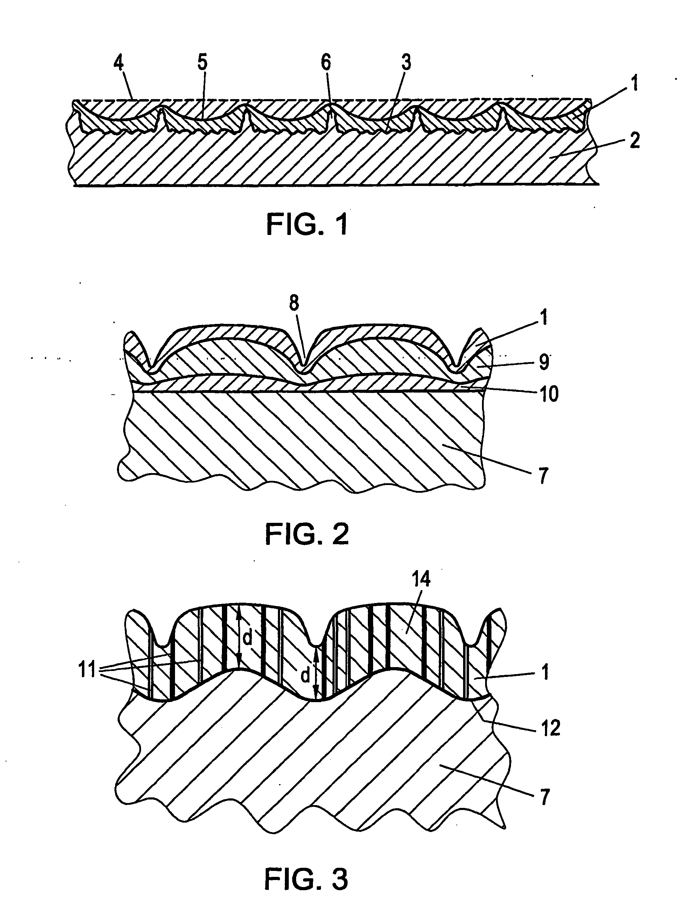

Wie aus Fig. 1 hervorgeht, erfolgte bisher die bekannte Herstellung einer Zurichtung 1 auf einer aus Silikonkautschuk bestehenden Unterlage 2 dadurch, dass auf die der Narbenstruktur der herzustellenden Zurichtung 1 entsprechende strukturierte Oberfläche 3 diese Unterlage 2 eine Kunststoffdispersion durch Rakeln, Spritzen, Walzenauftrag oder Gießen aufgetragen wird, welche beim Ausführungsbeispiel nach Fig. 1 ca. 55 % Feststoffanteil enthält. Unmittelbar nach dem Auftragen weist diese Kunststoffdispersion eine ebene, in Fig. 1 gestrichelt dargestellte Oberseite 4 auf. Nach dem Trocknen durch Wärmezufuhr über die Unterlage 2 schrumpft die Kunststoffdispersion infolge des Wasserentzuges, sodass der daraus gebildete Film eine Narbtäler und Narbkuppen aufweisende Oberfläche 5 besitzt. Da die Kunststoffdispersion in die Zwischenräume zwischen den von der Unterlage 2 abstehenden Narbkuppen 6 absackt, ist, wie aus der Zeichnung ersichtlich, der entstehende Film im Bereich dieser von der Unterlage 2 abstehenden Narbkuppen 6 sehr dünn, sodass dort die Gefahr von Brüchen und Beschädigungen gegeben ist.

Die Fig. 2 stellt ein bekanntes Leder 7 dar, das mit einer Zurichtung 1 gemäß Fig. 1 versehen ist. Die in Fig. 1 der Unterlage 2 zugewendete Seite der Zurichtung 1 stellt nun die Sichtseite dar, sodass, wie aus der Zeichnung ersichtlich, die Narbtäler 8 der Zurichtung 1 eine äußerst geringe Dicke aufweisen. Um diesen Nachteil zu kompensieren, müssen mehrere Ausgleichsschichten 9 und 10 zwischen dem Leder und der Zurichtung 1 vorgesehen werden, wobei die Ausgleichsschicht 9 beim in der Zeichnung dargestellten Ausführungsbeispiel aus einem geschäumten Material besteht und die Ausgleichsschicht 10 die Klebeschicht bildet. Diese verhältnismäßig dicken Ausgleichsschichten erhöhen die Gesamtdicke in unerwünschter Weise und bewirken vor allem, dass in der Zurichtung 1 eventuell vorhandene Poren od. dgl. verschlossen werden, so dass keine Luftdurchlässigkeit mehr vorhanden ist und Wasserdampfdurchlässigkeit wesentlich verringert ist.

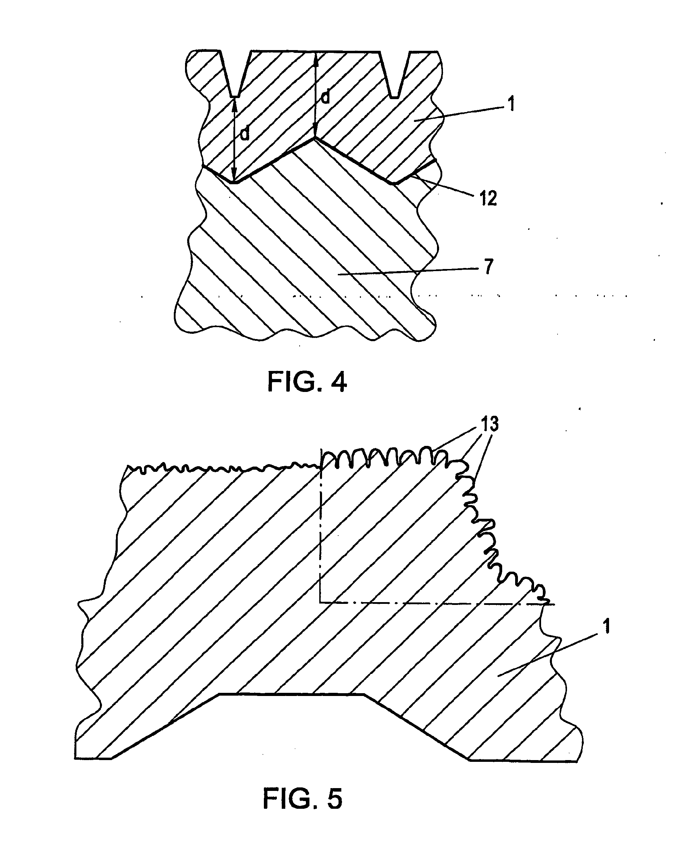

In den Fig. 3 und 4 ist ein erfindungsgemäßes, mit einer Zurichtung 1 versehenes Leder 7, insbesondere ein an seiner Narbenseite geschliffenes Leder oder ein Spaltleder, dargestellt. Wie aus der Zeichnung ersichtlich, weist hier die Zurichtung 1 im Bereich der Narbkuppen und im Bereich der Narbtäler im Wesentlichen dieselbe Dicke d auf. Es sind somit keine Schwachstellen verringerter Dicke vorhanden, welche die Festigkeit der Zurichtung 1 in unerwünschter Weise beeinträchtigen.

Wie aus den Fig. 3 und 4 weiter erkennbar, weist die Zurichtung 1 im Wesentlichen geradlinig verlaufende, über die gesamte Dicke durchgehende Kapillaren 11 unterschiedlichen Querschnittes auf, durch welche die erforderliche Luft- und Wasserdampfdurchlässigkeit gesichert ist. Diese Kapillaren sind unregelmäßig dicht an dicht nebeneinanderliegend angeordnet, sodass die Zurichtung 1 das Aussehen der Poren einer tierischen Haut aufweist, und weisen einen Durchmessen zwischen 0,009 mm und 0,02 mm auf,

Die Verbindung der Zurichtung 1 mit dem Leder 7 erfolgt über eine einzige, sehr dünne Verbindungsschicht 12, die weitgehend luft- und wasserdampfdurchlässig ist. Hierzu kann diese Verbindungsschicht 12 lediglich partiell auf der Oberfläche des Leders 7 vorgesehen sein bzw. Schwachstellen verringerter Dicke und/oder Unterbrechungen aufweisen.

Die Zurichtung 1 besteht aus einer verfestigten Dispersion, welche einen Anteil an Polyurethan mit zumindest teilweise kristalliner Struktur sowie einen Vernetzer enthält, und weist in allen Querschnittsbereichen annähernd die gleiche Struktur und die gleiche Dichte auf.

Wie aus dem rechten Teil der Fig. 5 ersichtlich ist, in welcher eine Narbkuppe der eine Narbstruktur aufweisenden Oberfläche der Zurichtung 1 in stark vergrößertem Maßstab dargestellt ist, können die Narbkuppen der Zurichtung 1 mit mikroskopisch kleinen, dicht an dicht angeordneten, glatten Erhöhungen 13 mit einem Durchmesser zwischen 5 µm und 15 µm versehen sein, welche auch die Form von feinen Haaren oder feinsten Faserbüscheln besitzen können und eine maximale Länge von 110 µm aufweisen. Durch diese Erhöhungen wird bewirkt, dass besonders Nassverschmutzungen auf der glatten Oberfläche bleiben und nicht in die Hohlräume zwischen den Narbkuppen absacken. Dadurch wird gewisser Maßen der bekannte Lotus-Effekt ausgenutzt und verhindert, dass der Schmutz sich vollständig auf der Oberfläche festsetzt.

Dem gleichen Zweck dient es, wenn der der Unterlage 2 aus Silikonkautschuk benachbarte Bereich der Zurichtung 1, welcher dann die Sichtseite bildet, in geringen Mengen Substanzen, wie Wachse oder Silikone, enthält, welche die Oberflächenspannung der Zurichtung 1 gegenüber Wasser verändern.

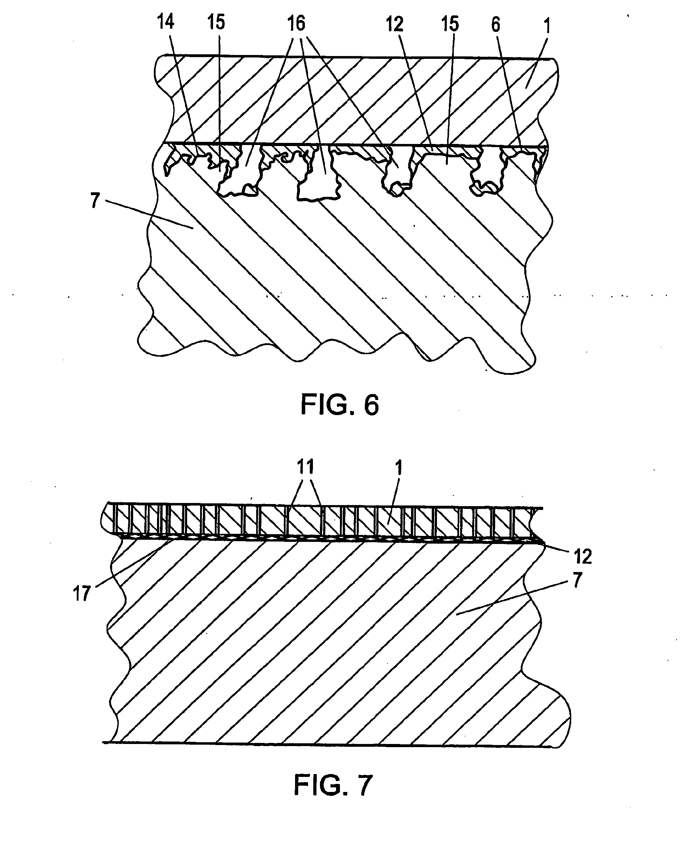

Fig. 6 zeigt in einem stark vergrößerten Querschnitt eine Ausführungsform, bei welcher das Leder 7 eine velourartige Oberseite 14 aufweist, die bei Verwendung eines Narbenleders von der geschliffenen Narbenseite und bei Verwendung eines Spaltleders von der feingeschliffenen Zurichtungsseite gebildet ist. Von dieser Oberseite 14 stehen Fasern bzw. Faserbüschel 15 ab, zwischen welchen Hohlräume 16 freigehalten sind. Die Oberseite 14 ist mit einer porösen Zurichtung 1 versehen, die aus einer auf einer aus Silikonkautschuk bestehenden, eine strukturierte Oberfläche aufweisenden Unterlage aufgebrachten und durch Erwärmung derselben verfestigten Kunststoffdispersion gebildet ist. Die Zurichtung 1 weist durchgängige Kapillaren auf, welche in der Zeichnung nicht dargestellt sind. Die durch diese Kapillaren gebildete Porenstruktur ist leicht feststellbar, wenn man die Zurichtung mechanisch oder durch chemische Mittel vom Leder 7 löst und dann bei leichter Dehnung gegen eine Lichtquelle hält.

Die Verbindung der Zurichtung 1 mit der Oberseite 14 des Leders 7 erfolgt über eine Verbindungsschicht 12, die, wie die Zeichnung zeigt, lediglich partiell, und zwar vor allem im Bereich der Kuppen der Fasern bzw. Faserbüschel 15 angeordnet ist, sodass die Hohlräume 16 zwischen diesen Fasern bzw. Faserbüscheln 15 im Wesentlichen freigehalten sind. Dadurch entsteht eine hohe Luft- und Wasserdampfdurchlässigkeit, welche noch dadurch verbessert wird, dass beim Belasten des mit einer Zurichtung 5 versehenen Leders 7 ein Pumpeffekt entsteht.

Wie die den Erfindungsgegenstand im Schnitt stark vergrößert dargestellte Zeichnung deutlich zeigt, befindet sich die Verbindungsschicht 12 im wesentlichen auf der velourartigen Oberseite14, die das charakteristische Bild eines geschliffenen Spalt-Velourleders aufweist, welches vor der Anbringung der Zurichtung 1 über einen sogenannten "Schreibeffekt" verfügt. Die Verbindungsschicht 12 konzentriert sich auf den oberen Bereich und teilweise auf den seitlichen Bereich der Fasern bzw. Faserbüschel 15, wobei am Boden der Hohlräume 16 zwischen diesen Fasern bzw. Faserbüscheln 15 allenfalls lediglich ein geringer Anteil der Verbindungsschicht 12 angeordnet ist, der aber mit der im oberen und seitlichen Bereich der Fasern bzw. Faserbüschel 15 befindlichen Verbindungsschicht 12 nicht zusammenhängt, so dass dazwischen Luftkammern entstehen.

Fig. 7 zeigt eine Ausführungsform, bei welcher ein an seiner Narbenseite angeschliffenes Narbenleder 7 oder ein Spaltieder 7 mit geschliffener Oberseite mit einer Zurichtung 1 versehen ist, welche über ihre ganze Dicke durchgehende Kapillaren 11 aufweist. Die Zurichtung 1 besteht aus einer verfestigten, Polyurethan enthaltenden, vernetzten Kunststoffdispersion und wird getrennt dadurch hergestellt, dass auf einer warmen Unterlage 2 aus mit einer strukturierten Oberfläche versehenem Silikonkautschuk eine wässerige Polyurethandispersion in Form eines feinen Sprühnebels aufgebracht wird, der sich unmittelbar nach dem Auftreffen auf die Unterlage verfestigt, wobei in der verfestigten Dispersion die erforderlichen durchgehenden Kapillaren 11 gebildet werden.

Die so gesondert hergestellte Zurichtung 1 wird unmittelbar nach ihrer Verfestigung über eine auf die Oberseite des Leders 7 aufgebrachte Verbindungsschicht 12 mit dieser Oberseite verbunden. Bei der in Fig. 7 dargestellten Ausführungsform weist diese Verbindungsschicht 12 eine punkt-, raster- oder gitterartige, somit netzartige Struktur auf, sodass nur an einzelnen Stellen bzw. Punkten eine Verbindung zwischen der Oberseite des Leders 7 und der Zurichtung 1 hergestellt wird und dazwischen Unterbrechungen 17 entstehen, welche mit den Kapillaren 11 in der Zurichtung 1 kommunizieren und dadurch die gewünschte Luft- und Wasserdampfdurchlässigkeit gewährleisten.

Die Unterbrechungen 17, weiche eine netzartige Struktur bilden, können eine beliebige Form aufweisen und beispielsweise rund, rechteckig oder linienförmig ausgebildet sein, aber auch jede andere geeignete Form besitzen.

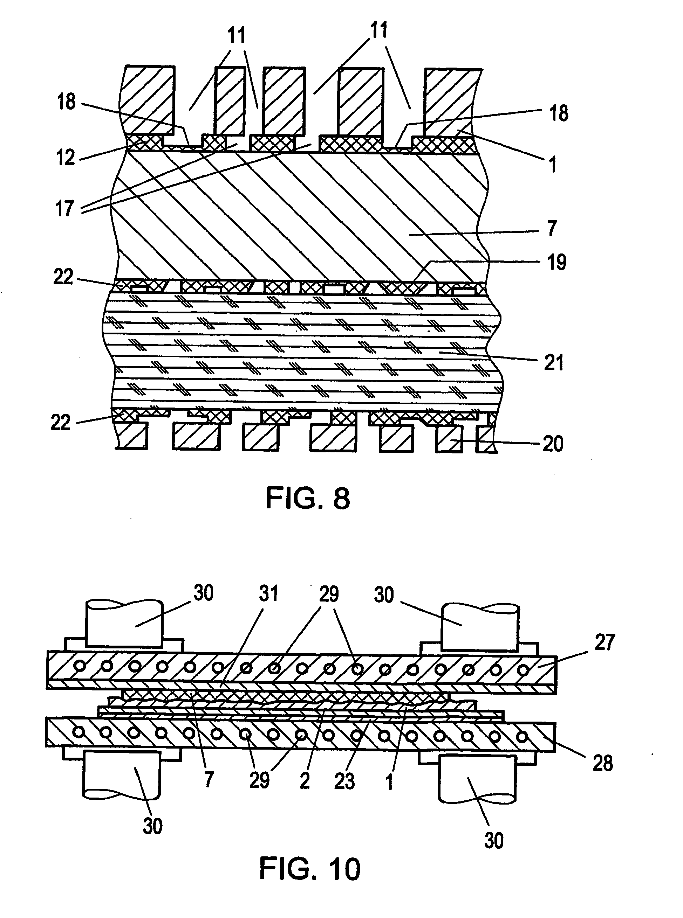

Bei der in Fig. 8 dargestellten Ausführungsform sind nicht nur derartige Unterbrechungen 17 in der Verbindungsschicht 12 vorgesehen, sondern diese weist auch Schwachstellen 18 auf, deren Dicke wesentlich geringer ist als die übrige Dicke der Verbindungsschicht 12, sodass auch über diese Schwachstellen 18 die Luft- und Wasserdampfdurchlässigkeit wesentlich erhöht und die Biegefähigkeit und die Haftung zwischen der Oberseite des Leders und der Zurichtung verbessert wird.

Zweckmäßig weist hierbei die Verbindungsschicht 17 eine maximale Dicke zwischen 0,01 mm und 0,05 mm auf, wobei aber die Schwachstellen 18 lediglich eine Dicke zwischen 0,002 mm und 0,01 mm besitzen.

Die Fleischseite 19 des Leders 7 ist bei der in Fig. 8 dargestellten Ausführungsform mit einem stark gerauten synthetischen Gewebe oder Gewirke 21 mit abstehenden Fasern versehen, das durch eine dünne Beschichtung 20 abgedeckt sein kann. Dadurch wird dem zugerichteten Leder mehr Volumen erteilt.

Die Verbindung zwischen der Fleischseite und dem Gewebe oder Gewirke erfolgt mittels eines Klebers derart, dass eine Klebewirkung nur zwischen den Fasern hergestellt wird.

Eine solche Ausbildung ist vor allem bei Verwendung von aus dem erfindungsgemäßen Leder gebildeten Formatzuschnitten für die Schuhherstellung von Vorteil, da in diesem Fall die offenporige dünne Beschichtung als Futtermaterial dient und eine gesonderte Aufbringung eines solchen Futtermaterials somit nicht erforderlich ist. Bei Schuhen erfolgt infolge der großen Wasserdampfdurchlässigkeit des Leders eine Ableitung des auftretenden Fußschweißes und infolge der großen Luftdurchlässigkeit eine Belüftung des Schuhinnenraums, bei Verwendung des erfindungsgemäßen Leders für Autositze und Polstermöbel eine Aufnahme der auftretenden Feuchtigkeit durch die Zurichtung hindurch vom Leder.

Die in der Zurichtung 1 vorgesehenen durchgehenden Kapillaren 11, welche eine Netzstruktur bilden, sind bei Ausleuchtung bereits bei einer 45-fachen Vergrößerung und einer Dehnung um 25 % deutlich erkennbar. Bei einem mechanisch oder chemischen unter Zuhilfenahme von Lösungsmitteln erfolgten Entfernen der Zurichtung 1 von der Verbindungsschicht 12 kann man bereits bei 16-facher Vergrößerung erkennen, dass die Verbindungsschicht 12 sowohl dicke Stellen als auch Schwachstellen aufweist und dass in den Schwachstellen ebenfalls porenförmige Unterbrechungen vorgesehen sind. Zum Ermitteln der Dicke der losgelösten Zurichtung weist der Zurichtungsfilm bei einem Anpressdruck von 2 kg/cm² eine Stärke von maximal 0,06 mm auf.

Bei allen beschriebenen Ausführungen können sowohl in der Zurichtung 1 als auch in der Verbindungsschicht 12 Mikrohohlkugeln mit einem Durchmesser von weniger als 21 µm vorgesehen sein.

Das erfindungsgemäße Leder weist in Bezug auf die Luft- und Wasserdampfdurchlässigkeit ähnliche bis gleiche Eigenschaften wie Semianilinleder auf und ist einem mechanisch mit Perforationen versehenen Leder überlegen, seine Sichtseite ist aber auch mechanisch sehr gut belastbar sowie lichtecht und schmutzabweisend.

Die vorliegende Erfindung ist vor allem bei Rindledern, aber auch bei an ihrer Narbenseite geschliffenen Schweine-, Kalb-, Ziegen- und Schafledern anwendbar, insbesondere dann, wenn solche Leder für die Schuhherstellung verwendet werden, ferner aber auch bei Verwendung von synthetischem Velourmaterial als Träger.

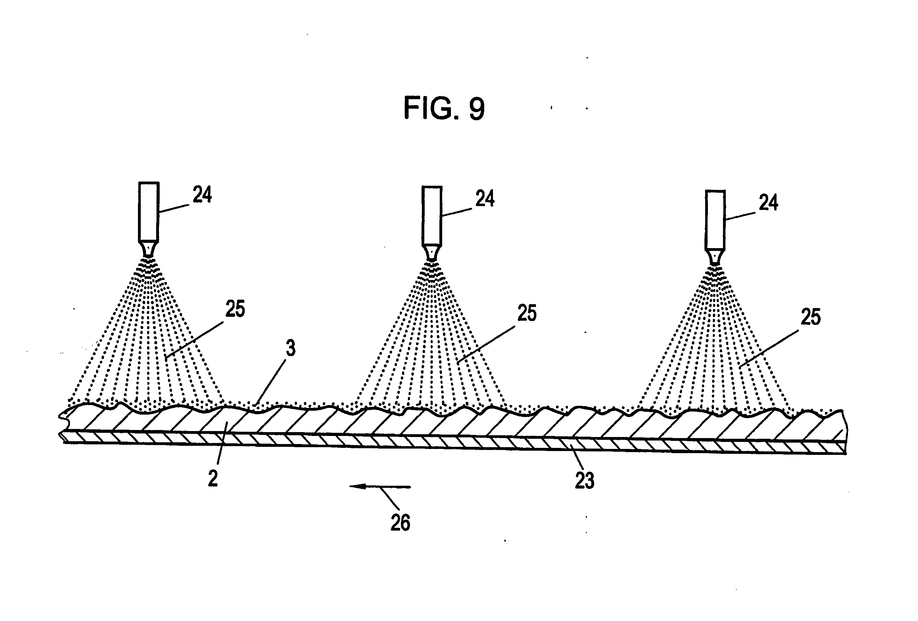

Die Herstellung der Zurichtung 1 wird an Hand der Fig. 9 näher erläutert Eine druckelastische Unterlage 2, deren strukturierte Oberfläche 3 der Narbenstruktur der herzustellenden Zurichtung 1 entspricht, und die mit einer wärmeleitenden Stützplatte 23 aus Aluminiumblech fest verbunden ist, wird über Heizeinrichtungen derart erwärmt, dass die Oberfläche 3 der Unterlage 2 eine Temperatur von etwa 80 °C aufweist. Auf diese erwärmte Oberfläche 3 wird über einen geringen Durchmesser aufweisende Sprühdüsen 24 eine Polyurethandispersion in Form eines feinen Sprühnebels 25 aufgetragen, während sich die Unterlage 2 in Richtung des Pfeiles 26 weiterbewegt. Spätestens beim Auftreffen auf die warme Oberfläche 3 der Unterlage 2 erfolgt eine Verfestigung des Sprühnebels 25 durch Wasserentzug, so dass auf der Unterlage 2 ein dünner, netzartiger, Kapillaren 11 aufweisender Film gebildet wird. Sobald dieser Film grifftrocken ist, wird ein Leder 7, auf dessen Oberseite eine die Verbindungsschicht 12 bildende Kunststoffdispersion aufgebracht wurde, mit dieser Oberseite auf den Film aufgelegt und zusammen mit der Unterlage 2 in einer in Fig. 10 dargestellten Presse verpresst. Diese weist zwei metallische Druckplatten 27, 28 auf, in welchen Heizelemente 29 eingebettet sind. Die Druckplatten 27,28 sind auf Abstützungen 30 hydraulisch bewegbar gelagert.

Die obere Druckplatte 27 ist mit einer druckelastischen Auflage 31 versehen. Das Leder 7, welches mit der die Verbindungsschicht 12 aufweisenden Oberseite auf die auf der Unterlage 2 befindlichen Zurichtung 1 aufgelegt wurde, wird hierauf zusammen mit dieser Unterlage 2 zwischen die Druckplatten 27, 28 positioniert, worauf mittels dieser Druckplatten ein regelbarer Pressdruck von etwa 3,5 kg/cm² ausgeübt wird und gleichzeitig die Druckplatten 27, 28 auf eine regelbare Temperatur von etwa 90 °C erwärmt werden. Durch die druckelastische Auflage 31 einerseits und durch die druckelastische Ausbildung der Unterlage 2 andererseits wird sichergestellt, dass bei der Druckausübung die Kapillaren 11 in der Zurichtung 1 und die Unterbrechungen in der Verbindungsschicht 12 erhalten bleiben und daher die erforderliche Luft- und Wasserdampfdurchlässigkeit gewährleistet ist.

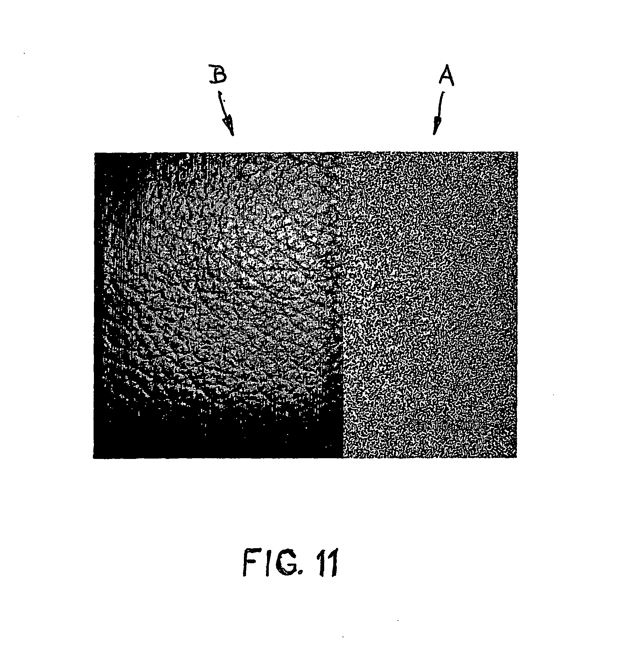

Die Fig. 11 zeigt die Fotografie der auf einer Unterlage 2 hergestellten Zurichtung 1, wie sie das erfindungsgemäße Leder besitzt. Der rechte Bereich A wurde bei der Aufnahme von der Unterseite her mit einer Lichtquelle angestrahlt und zeigt deutlich, dass die Zurichtung eine netzartige Struktur aufweist, also durchgehende Kapillaren besitzt, der linke Bereich B, bei welchem die Unterseite abgedeckt wurde, zeigt deutlich die Narbenstruktur der Zurichtung.

An Hand der Zeichnungen wurde die Erfindung im Zusammenhang mit einem Leder als Träger erläutert. An Stelle des Leders kann aber immer auch ein synthetisches Velourmaterial als Träger Verwendung finden.

### Beispiel 1:

Ein graues chromgegerbtes foggingarmes Kalbsleder mit einer Stärke von etwa 1,2 mm und einer Größe von 2,10 m² wird auf seiner Narbenseite mit einem Schleifpapier Körnung 280 ganz leicht angeschliffen, und zwar so, dass die Haarporen noch weitgehend erhalten bleiben. Anschließend wird das Leder sechs Stunden gewalkt.

Auf eine druckelastische Unterlage aus Silikonkautschuk mit einer Dicke von etwa 2 mm, die an ihrer Unterseite mit einer Stützplatte aus einem etwa 1,5 mm dicken Aluminiumblech durch Verkleben fest verbunden ist, und die eine strukturierte Oberfläche besitzt, welche im Negativ einer natürlichen vollnarbigen Kalbslederhaut entspricht, und die überall eine Temperatur von91°C aufweist, wird eine Polyurethandlsperslonsmischung in einer Menge von 88 g/m² aufgetragen Die Dispersionsmischung besteht im wesentlichen aus 680 g einer nicht thermoplastischen Polyurethandispersion mit einem Erweichungspunkt von etwa 195 °C, welche nach Wasserentzug nicht zum Schmelzen gebracht werden kann, weil die Zerstörungstemperatur unter der Schmelztemperatur liegt, und aus 250 g einer feinteiligen thermoplastischen Polyurethandispersion mit einem Erweichungspunkt von etwa 62°C, deren Schmelzpunkt bei etwa 95°C liegt und deren Klebepunkt unmittelbar nach Trocknung, aber vor der Vernetzung bei einer Temperatur von etwa 55°C beginnt.

Außerdem weist diese Dispersionsmischung 4 Gew.-% eines 80 %-igen Polyisocyanatvemetzers, bezogen auf den Polyurethanfeststoffanteil der Dispersion, 8,5 Gew.-% schwarzes Pigment bezogen auch den polymeren Feststoffanteil, 2,5 Gew.-% eines Silikongriffmittel mit einem Feststoffanteil von etwa 45%, 1 Gew.-% Mikrohohlkugeln bezogen auf das gesamte Gewicht mit einem Durchmesser kleiner als 21µm, sowie 0,5 Gew.-% eines Verdickers auf Acrylatbasis auf. Dieser Mischungsansatz hat einen Polymeren-Feststoffanteil von etwa. 35 Gew.-%. Das Auftragen erfolgt ohne Luftbeimengung mit zwei Sprühdüsen, die einen Durchmesser von je 0,46 mm besitzen, bei einem Druck von 65 bar.

Die beiden hintereinander angeordneten Sprühdüsen sind in einem Abstand von 80 cm von der durchlaufenden Unterlage in Bewegungsrichtung derselben in einem Abstand voneinander angeordnet und bewegen sich quer zu dieser Bewegungsrichtung. Die Unterlage ist etwas größer als das Kalbsleder. Die Unterlage hat nach etwa 14 Sekunden die Sprühstation mit den beiden Sprühdüsen durchlaufen und besitzt immer noch eine Temperatur von 59°C. Nach einer etwa zwei minütigen Beaufschlagung mit trockener, etwa 85°C warmer Luft ist die so hergestellte, aus einem netzartigen Film bestehende Zurichtung wasser- oder nahezu wasserfrei.

Zeitnah wird auf das Leder, vorzugsweise ebenfalls ohne Luftbeimengung, mit zwei Sprühdüsen, die einen Düsendurchmesser von 0,52 mm aufweisen, unter einem aus den Düsen austretenden Sprühwinkel von 80° eine eine Polyurethanmischung enthaltende Dispersion aufgesprüht. Die Auftragsmenge beträgt etwa 90 g/m² nass. Bei dieser Sprühauftragsmenge wird den feinen Tröpfchen unmittelbar nach dem Auftreffen auf das Leder durch die Dochtwirkung desselben soviel Wasser entzogen, dass auch hier ein netzartiges Gebilde mit vielen durchgehenden Kapillaren entsteht. Auch ohne Wärmezufuhr ist der Sprühauftrag nach drei Minuten grifftrocken und bildet eine thermoplastische Verbindungsschicht, und das Leder kann mit dieser auf die Zurichtung, welche sich auf der vorzugsweise noch warmen Unterlage befindet, aufgelegt und mit dieser Zurichtung in einer beheizten Presse zwischen druckelastischen Abstützungen verbunden werden.

Durch die gute Wärmeleitfähigkeit der aus Aluminium bestehenden Stützplatte wird die Wärme von der Presse schnell aufgenommen und an die thermoplastische Verbindungsschicht weitergegeben. Bei einer Presshelzplattentemperatur von 90°C, einem Pressdruck von etwa 2 bar am Leder und einer Einiauftemperatur der Unterlage mit dem aufliegenden Leder von 48°C genügt eine Verwellzeit in der Presse von weniger als 25 Sekunden. Der Verbund zwischen der druckelastische Oberfläche der Unterlage und der Abstützung aus Aluminium bietet nicht nur beim Pressen Vorteile, sondern auch beim Besprühen, weil die warme Aluminiumplatte als Wärmespeicher dient und während des Sprühvorganges ständig Wärme an die Unterlage abgibt.

Die die Verbindungsschicht bildende thermoplastische Polyurethandispersionsmischung besteht im wesentlichen aus 700 g einer feinteiligen Polyurethandispersion mit einem Erweichungspunkt von etwa 62°C und einem beginnenden Klebepunkt von etwa 55°C, 180 g sehr weiches Polyacrylat, 200 g Polyurethan mit einem Erweichungspunkt von etwa 170°C, 9 Gew.-% Vernetzer bezogen auf den Gesamtansatz, sowie 3 Gew.-% schwarzes Pigment. Das fertige Leder besitzt nach der Zurichtung nahezu die gleiche Weichheit wie vorher. Es weist eine Wasserdampfdurchlässigkeit von 3,6 mg/cm².h auf und ist so stark luftdurchlässig, dass man mit dem Mund Luft hindurch pusten kann.

### Beispiel 2:

Eine chromfrei gegerbte foggingarme schwarze Rindslederhaut mit einer Stärke zwischen 1,10 mm und 1,25 mm und einer Größe von 5,2 m² wurde mit Schleifpapier Körnung 150 auf seiner Narbenseite geschliffen und anschließend 12 Stunden gemillt (gewalkt). Nach dem Millen sind die Flanken schwammig und doppelhäutig und würden bei einem Zurichten der ganzen Haut nach bekannten Verfahren dazu führen, dass etwa 50 % der Fläche nach dem Zurichten beim Gestalten der Oberfläche mit einer mittelfeinen Prägung unbrauchbar wird.

Das Kernstück der Haut, welches nach dem Millen noch einigermaßen festnarbig und zum Zurichten mit einer mittelfeinen Prägung geeignet ist, misst 1,95m². Dieser Teil wurde der Haut wird entnommen und zugerichtet.

Dabei wird auf eine auf 90°C erwärmte Unterlage, deren strukturierte Oberfläche im Negativ einer mittelfeinen Nappaprägung entspricht, mit drei Sprühdüsen, wie in Beispiel 1 beschreiben, eine Kunststoffdispersionsmischung in einer Menge von 135 g/m² so aufgetragen, dass ein die Zurichtung bildender netzartiger Film entsteht Die Zusammensetzung der Dispersionsmischung unterscheidet sich von der in Beispiel 1 angegebenen lediglich darin, dass an Stelle von 680 g nicht thermoplastischem Polyurethan nur 580 g und anstelle von 250 g thermoplastischem Polyurethan 350 g verwendet werden.

Während des gesamten Sprühvorganges ist die Oberfläche der Unterlage warm, weil die Stützplatte aus Aluminiumblech Wärme an die Unterlage abgibt.

Etwa zeitgleich wurde das Lederkemstück, welches zur Bildung der Verbindungsschicht, ebenso wie im Beispiel 1 beschrieben, mit der Kunststoffdispersion besprüht wurde, auf die etwa 39°C warme Unterlage gelegt und, wie im Beispiel 1 beschrieben, verpresst. Nach dem Pressvorgang wurde das Leder 30 Minuten hängend gelagert und dann auf einer Palette abgelegt. Die zugerichtete Oberfläche zeigt keine trichterartige Einfallstellen, die zahlreich vorhandenen durchgängigen Kapillaren sind nicht sichtbar. Die Wasserdampfdurchlässigkeit beträgt 2,9 mg/cm².h. Man kann mit dem Mund Luft durch das Leder hindurchpusten.

### Beispiel 3:

Aus schwammigen Lederflanken wurden grobe Formatteile für Fahrzeugsitze herausgestanzt. Auf eine 95°C warme druckelastische Unterlage aus Silikonkautschuk, deren strukturierte Oberfläche im Negativ einer sehr groben Narbung entspricht und bei der die Tiefenunterschiede zwischen Narbenkuppen und Narbtäler im Mittel 0,05 mm betragen, wird in einem ersten Schritt mit zwei Sprühdüsen die gleiche Mischung in der gleichen Menge aufgesprüht, wie dies in Beispiel 1 beschrieben ist. Dabei bildet sich sowohl auf den Narbenkuppen als auch in den Narbtälem ein gleichmäßig starker, netzartiger, die Zurichtung bildender Film. Damach wird auf den auf der Unterlage befindlichen, etwa 65°C warmen Film mit einer Sprühdüse eine Mischung, wie in Beispiel 2 beschrieben, in einer Menge von 60 g/m² aufgesprüht. Auch dieser Sprühauftrag wird beim Auftreffen auf den ersten warmen Sprühauftrag fest und verstärkt somit den ersten Film gleichmäßig sowohl im Bereich der Narbkuppen als auch im Bereich der Narbtäler. Mittels einer gleichlaufenden Auftragswalze wurde eine die Verbindungsschicht bildende thermoplastische Dispersionsmischung gemäß Beispiel 1 in einer Menge von etwa 55 g/m² so auf das Leder aufgetragen, dass ein überwiegend zusammenhängender Film mit dickeren und dünnen Zonen entsteht. Das Auflegen und Verpressen erfolgte wie in Beispiel 1 beschrieben.

Das fertige Leder wirkt nicht mehr schwammig, ist weich und besitzt eine Wasserdampfdurchlässigkeit von 1,95 mg/cm².h, und man kann Luft hindurchblasen.

### Beispiel 4:

Ein feingeschliffener Rindslederspalt mit einer Stärke zwischen1,2 mm und 1,3 mm und einer Größe von 1,6 m² wird, wie im Beispiel 2 beschrieben, zugerichtet. Nach seiner Zurichtung ist er noch so luftdurchlässig, dass man Luft hindurchblasen kann, und besitzt nahezu die gleiche Weichheit wie vor seiner Zurichtung.

### Beispiel 5:

Zum Herstellen eines Leder mit einer nubukartigen Zurichtung wird eine Unterlage aus Silikonkautschuk verwendet, die neben ihrer rauen Oberfläche feine Vertiefungen aufweist. Die Vertiefungen zur Bildung der härchenartigen Nubuk-Effekte wurden durch eine Laserbehandlung der Oberfläche der Unterlage eingebracht.

Auf die 40 °C warme Unterlage, die mit einer Stützplatte aus Aluminiumblech verbunden ist, wird mit einer Hochdrucksprühdüse eine besonders feinteilige, niedrigviskose Polyurethandispersion mit einem Feststoffantell von ca. 25% aufgesprüht. Die Dispersion besteht zu mehr als 80 Gew.-% aus nicht thermoplastischem Polyurethan und enthalt 5 % Vernetzer und 4 % einer 60 %igen wässerigen Silikonemulsion sowie Pigmente. Die Auftragsmenge beträgt etwa 60 g/m². Damach wird die Silikonunterlage auf 60°C aufgeheizt und darauf mit zwei Sprühdüsen eine Polyurethandispersionsmischung, wie in Beispiel 1 beschrieben, aufgetragen. Diese beiden Dispersionsaufträge bilden die Zurichtung mit einer feinnetzartigen Struktur.

Ein chromgegerbtes Rindsleder, dessen Narbenseite mit einem Schleifpapier Körnung 320 geschliffen und 8 Stunden gemillt wurde, wurde in Formatzuschnitte für Autositze zerlegt. Auf die Formatzuschnitte wurde eine Verbindungsschicht so aufgebracht, wie in Beispiel 1 beschrieben. Auch das Verpressen erfolgte wie in Beispiel 1 erwähnt. Das fertige Leder besitzt eine schöne griffangenehme Nubukoberfläche und erfüllt alle Parameter der Fahrzeugindustrie. Es ist wasserdampfdurchlässig und das Durchblasen von Luft mit dem Mund ist möglich.

Es wurde gefunden, dass sich beim erfindungsgemäßen Träger nicht nur die Luft- und Wasserdampfdurchlässigkeit, sondern auch die mechanischen Festigkeitseigenschaften, vor allem die Abrieb- und Kratzfestigkeit, nach abgeschlossener Vernetzung wesentlich verbessern lassen, insbesondere dann, wenn für die Bildung der Zurichtung bekannte nicht thermoplastische Polyurethandispersionen und Polyurethandispersionen, wie sie als Klebstoffausgangsmaterial bekannt sind, als Abmischung zur Anwendung kommen. Es wurde ermittelt, dass bei einem derart zugerichteten Träger mit einer Fläche von 100 cm² bei einem Druck von 2 bar ein Luftdurchsatz von mehr als 10 l/min stattfindet.

Durch das Abmischen solcher Dispersionen kann nicht nur der gewünschte Erweichungspunkt variiert werden, sondern es können auch alle anderen Eigenschaften verbessert werden.

Die erfindungsgemäßen Träger weisen im Vergleich mit bekannten Trägem, gleichgültig, nach welchen Verfahren diese hergestellt wurden, bei vergleichbarer Dicke der Zurichtung eine wesentlich höhere Wasserdampfdurchlässigkeit, und eine hohe Luftdurchlässigkeit auf, die bei allen anderen Trägem mit vergleichbarer Dicke der Zurichtung völlig fehlt. Diese Träger erfüllen auch den von der US-Automobilindustrie geforderten CROCKMETERTEST in Kombination mit MEK. MEK dringt zwar in die Poren des Trägers ein, jedoch ohne die Oberfläche zu beschädigen und ohne Farbänderungen zu bewirken.

Träger, die mit einer Zurichtung mit einer Nubukoberfläche, welche feinste Härchen aufweist, versehen sind, erfüllen im Gegensatz zu echten Nubukledern alle von der Fahrzeugindustrie geforderten Parameter. Sie sind pflegeleicht, werden nicht speckig, bleiben immer matt und sind im Gegensatz zu synthetischem Nubuk nicht brennbar und temperatur- und lösungsmittelbeständig.

### Beispiel 6:

Um sowohl ein Leder mit einer feinfaserigen velourartigen Oberfläche als auch einen textilen Träger, bestehend aus Mikrofasern, mit einer feinfaserigen Oberfläche mit einen Nubuk-Effekt zu versehen, so dass beide Materialien mit den unterschiedlichen Trägem später die gleiche Oberfläche zeigen, um in Kombination in einem Fahrzeug oder als Polstermöbelbezug verarbeitet zu werden, wird wie folgt vorgegangen.

Die Unterlage besteht aus Silikonkautschuk und besitzt im Negativ die Nubukstruktur, das heißt die Oberfläche ist rau und weist Vertiefungen auf, die zur Bildung der feinsten Härchen beziehungsweise feinsten Faserbüscheln führen. Die Vertiefungen wurden mittels Laser, dicht an dicht, in die Unterlage eingebracht. Diese negative Oberfläche der Unterlage aus Silikonkautschuk wurde folienartig mit einem Kunststoffmaterial beschichtet, um die negative Struktur der Silikonoberfläche positiv auf die Kunststofffolle zu übertragen. Diese Kunststofffolle dient als Mutter zum Abformen von Silikonunterlagen, bei denen dann wiederum die Nubukstruktur enthalten ist. Das hat den Vorteil, dass nicht jede Unterlage aus Silikonkautschuk gelasert werden muss, weil erfindungsgemäß die gelaserte Form über die Mutter vervielfältigt werden kann.

Die Unterlage hat eine Stärke von 2 mm ist mit einem Aluminiumblech durch Kleben verbunden und hat eine Länge von 2 m und eine Breite von 1,5 m. Die Unterlage wird auf eine Temperatur von 66°C erwärmt und unter den Bedingungen, wie in Beispiel 1ausgeführt, besprüht.

Zeitnah werden Leder und ein Vliesmaterial aus Mikrofasern, dessen Hohlräume mit einem koagulierten Polyurethan ausgefüllt sind, wobei es eine von den abstehenden Mikrofasern gebildete velourartige Oberfläche aufweist, wie Beispiel 1 beschrieben mit der Kunststoffdispersion besprüht und beide Träger nach etwa 5 Minuten. also grifftrocken auf die noch warme Unterlage aufgelegt und unter Bedingungen, wie in Beispiel 1 angegeben, verpresst.

Nach etwa 15 Sek. wird das Material der Presse entnommen. Es besitzt den hochwertigen Nubukeffekt mit seinen feinen abstehenden Härchen, die einen für Nubuk typischen Schreibeffekt aufweisen.

Durch beide Nubukmaterialien kann man hindurchblasen und man kann nach ihrer Vernetzung eine Zigarette auf ihnen ausdrücken, ohne Beschädigung. Auch kann man es mit vielen Lösungsmitteln, unter anderem auch mit Benzin und MEK ohne Beschädigung der Oberfläche in Verbindung bringen.

Beide Materialien besitzen einen ausgeprägten Pumpeffekt, das heißt, ein aufgebrachter Wassertropfen zieht bei Druck, Be- und Entlastung innerhalb kurzer Zeit durch die Zurichtung hindurch, in den Träger ein. Beide Materialien mit der nubuktypischen Oberfläche haben gegenüber echtem Nubukledern den Vorteil dass sie nicht speckig werden. Ein entspannter Wassertropfen, der auf die Oberfläche aufgebracht wird, zieht innerhalb von zwei Minuten ohne Pumpeffekt in die Oberfläche ein.

Das synthetische Trägermaterial wird vor dem Besprühen immer als Format oder Grobformatteil aus einer Bahnenware herausgeschnitten.

Ein großer Vorteil besteht darin, dass das Leder und der textile Träger aus Mikrofasern mit gleicher Nubuk-Oberfläche zugerichtet sind und, wenn sie kombiniert verarbeitet werden, farblich und grifflich optimal zusammen passen und gemeinsam altern, das heißt, dass auch nach langer Zeit die Zurichtung beider Materialien gleiches Aussehen aufweist.

Der erfindungsgemäße Nubukeffekt oder Narbnubukeffekt ist immer höherwertiger als ein Veloureffekt. Im Rahmen der Erfindung ist es möglich, koagulierte und geschliffenen Mikrofaservliese, wie beispielsweise Alcantara mit seinem Veloureffekt mit einer Nubukzurichtung zu versehen die optisch höherwertig ist und die die Nachteile wie mangelnde Temperaturbeständigkeit, Verschmutzbarkeit usw. beseitigen.

## Patentansprüche

1. An ihrer Sichtseite mit einer eine Narbenstruktur aufweisenden Zurichtung (1) versehener, eine veloursartige, feinfaserige Oberseite aufweisender Träger (7), wobei die Zurichtung (1) aus einer verfestigten Kunststoffdispersion besteht und über eine aus einer verfestigten, Polyurethan enthaltenden, vernetzten Kunststoffdispersion gebildete Verbindungsschicht (12), welche auf der Oberseite des Trägers (7) aufgebracht ist, mit diesem verbunden ist, **dadurch gekennzeichnet, dass** die Zurichtung (1) über ihre gesamte Dicke durchgehende Kapillaren (11) aufweist und sowohl im Bereich der Narbkuppen (6) als auch im Bereich der Narbtäler (8) im Wesentlichen dieselbe Dicke (d) besitzt und über eine einzige dünne Verbindungsschicht (12) mit dem Träger (7) verbunden ist und wobei die Zurichtung (1) aus einer Kombination einer verfestigten, einen Vernetzer enthaltenden Polyurethandispersion mit einem hohen Erweichungspunkt und einer verfestigten, einen Vernetzer enthaltenden Polyurethandispersion mit einem niedrigen Erwelchungspunkt, die vor dem Vernetzen thermoplastisch ist, besteht und weiterhin geschlossene Zellen bildende Mikrohohlkugeln mit einem Durchmesser von weniger als 21 µm enthalten kann und/oder auf ihrer Sichtseite Wachse und/oder Silikone umfassen kann.

2. Mit einer Zurichtung versehener Träger nach Anspruch 1, **dadurch gekennzeichnet, dass** es sich bei dem Träger (7) um ein Narbenleder mit einer die Oberseite bildenden geschliffenen Narbenseite, ein Spaltleder mit geschliffener Oberseite oder ein synthetisches Veloursmaterial mit einer aus Mikrofasern bestehenden Oberseite handelt.

3. Träger nach Anspruch 1, **dadurch gekennzeichnet, dass** die Kapillaren (11) einen unterschiedlichen Querschnitt aufweisen.

4. Träger nach Anspruch 1, **dadurch gekennzeichnet, dass** die Kapillaren (11) in der Zurichtung (1) unregelmäßig verteilt angeordnet sind.

5. Träger nach einem der Ansprüche 1 bis 4, **dadurch gekennzeichnet, dass** die Kapillaren (11) einen Durchmesser zwischen 0,005 mm und 0,05 mm aufweisen.

6. Träger nach einem der Ansprüche 1 bis 5, **dadurch gekennzeichnet, dass** die Zurichtung (1) auf eine Fläche von 100 cm² mindestens 100 Kapillaren (11) aufweist.

7. Träger nach einem der Ansprüche 1 bis 5, **dadurch gekennzeichnet, dass** die Kapillaren (11) im wesentlichen geradlinig verlaufen.

8. Träger nach Anspruch 1, **dadurch gekennzeichnet, dass** die Verbindungsschicht (12) Unterbrechungen aufweist.

9. Träger nach Anspruch 1, **dadurch gekennzeichnet, dass** die Verbindungsschicht (12) Schwachstellen (18) verringerter Dicke aufweist.

10. Träger nach Anspruch 1, **dadurch gekennzeichnet, dass** die Verbindungsschicht (12) lediglich partiell auf der Oberfläche des Trägers (7) angeordnet ist.

11. Träger nach Anspruch 1, **dadurch gekennzeichnet, dass** die Verbindungsschicht (12) eine punkt-, raster- oder gitterförmige oder eine netzartige Struktur aufweist.

12. Träger nach Anspruch 8, **dadurch gekennzeichnet, dass** die Verbindungsschicht (12) eine maximale Dicke zwischen 0,01 mm und 0,05 mm und an ihren Schwachstellen (18) eine Dicke zwischen 0,002 mm und 0,01 mm aufweist.

13. Träger nach Anspruch 1, **dadurch gekennzeichnet, dass** seine Oberseite (14) faserig ausgebildet ist und dass die Verbindungsschicht (12) überwiegend im Bereich der Faserspitzen angeordnet ist, so dass zwischen diesen einen Pumpeffekt bewirkende Hohlräume (16) freigehalten sind.

14. Träger nach Anspruch 1, **dadurch gekennzeichnet, dass** die Verbindungsschicht (12) aus einer verfestigten Polyester-Polyurethandispersion besteht.

15. Träger nach Anspruch 1, **dadurch gekennzeichnet, dass** die Polyurethan enthaltende Dispersion zumindest teilweise eine kristalline Struktur oder eine teilkristalline Struktur aufweist.

16. Träger nach Anspruch 1, **dadurch gekennzeichnet, dass** die Kunststoffdispersion klebrig wirkende Zusätze enthält.

17. Träger nach Anspruch 1, **dadurch gekennzeichnet, dass** die Verbindungsschicht (12) eine Schaumstruktur aufweist.

18. Träger nach Anspruch 1, **dadurch gekennzeichnet, dass** die Verbindungsschicht (12) Mikrohohlkugeln mit einem Durchmesser von weniger als 21 µm enthält.

19. Träger nach Anspruch 1, **dadurch gekennzeichnet, dass** die Verbindungsschicht (12) ein Flächengewicht zwischen 20 g/m² und 90 g/m² aufweist.

20. Träger nach Anspruch 1, **dadurch gekennzeichnet, dass** die Zurichtung (1) in allen Querschnittsbereichen annährend die gleiche Struktur und die gleiche Dichte aufweist.

21. Träger nach Anspruch 1, **dadurch gekennzeichnet, dass** es sich bei der Polyurethandispersion mit einem niedrigen Erweichungspunkt um eine handelt, die eine kristalline oder teilkristalline Struktur aufweist.

22. Träger nach Anspruch 1, **dadurch gekennzeichnet, dass** die Zurichtung (1) geschlossene Zellen bildende Mikrohohlkugeln mit einem Durchmesser von weniger als 21 µm enthält.

23. Träger nach Anspruch 1, **dadurch gekennzeichnet, dass** die Narbkuppen (6) der Zurichtung (1) mikroskopisch kleine glatte Erhöhungen (13) aufweisen.

24. Träger nach Anspruch 1, **dadurch gekennzeichnet, dass** die Sichtseite der Zurichtung (1) eine Nubukstruktur aufweist, aus welcher feine Haare herausragen, welche mikroskopisch kleine Erhöhungen bilden.

25. Träger nach Anspruch 23 oder 24, **dadurch gekennzeichnet, dass** die Erhöhungen (13) einen Durchmesser zwischen 3 µm und 60 µm sowie eine maximale Länge von 110 µm aufweisen.

26. Träger nach Anspruch 1, **dadurch gekennzeichnet, dass** die Zurichtung (1) an ihrer Sichtseite Wachse und/oder Silikone enthält.

27. Träger nach Anspruch 1, **dadurch gekennzeichnet, dass** an seiner der mit der Zurichtung (1) versehenen Oberseite gegenüberliegenden Seite (19) ein stark gerautes synthetisches Gewebe oder Gewirke (21) mit abstehenden Fasern vorgesehen ist.

28. Träger nach Anspruch 27, **dadurch gekennzeichnet, dass** das Gewebe oder Gewirke (21) durch eine dünne Beschichtung (20) abgedeckt ist.

29. Verfahren zur Herstellung eines an seiner Sichtseite mit einer eine Narbenstruktur aufweisenden Zurichtung (1) versehenen, eine veloursartige, feinfaserige Oberseite aufweisenden Trägers (7), wobei zunächst zur Bildung der Zurichtung (1) eine wässerige Kunststoffdispersion, die aus einer Kombination einer einen Vernetzer enthaltenden Polyurethandispersion mit einem hohen Erweichungspunkt und einer einen Vernetzer enthaltenden Polyurethandispersion mit einem niedrigen Erweichungspunkt besteht und weiterhin geschlossene Zellen bildende Mikrohohlkugeln mit einem Durchmesser von weniger als 21 µm enthalten kann und/oder auf ihrer Sichtseite Wachse und/oder Silikone umfassen kann, wobei letztere Dispersion vor dem Vernetzern thermoplastisch ist, auf eine aus Silikonkautschuk bestehende Unterlage (2), welche eine der Narbenstruktur der Zurichtung (1) entsprechende strukturierte Oberfläche (3) aufweist, aufgebracht und zu einem Film verfestigen gelassen wird, weiters auf die Oberseite des Trägers (7) eine eine Verbindungsschicht (12) bildende Polyurethan enthaltende Kunststoffdispersion aufgetragen wird, und weiters der Träger (7) mit dieser Oberseite auf den Film aufgelegt und einer Druck- und Wärmebehandlung unterzogen wird, **dadurch gekennzeichnet, dass** die eine lösungsmittelfreie, Polyurethan sowie einen Vernetzer enthaltende Kunststoffdispersion auf die eine gleichmäßige Temperatur von weniger als 105 °C aufweisende Unterlage (2) derart aufgetragen wird, dass sich diese Kunststoffdispersion beim Auftreffen auf die Unterlage (2) sofort verfestigt und nach Wasserverdampfung ein gleichmäßig dicker, eine Netzstruktur aufweisender Film mit einer Dicke von weniger als 0,04 mm gebildet wird.

30. Verfahren nach Anspruch 29, **dadurch gekennzeichnet, dass** die Kunststoffdispersion mittels eines durch einen kleinen Durchmesser aufweisende Sprühdüsen (24) erzeugten feinen Sprühnebels (25) auf die erwärmte Unterlage (2) aufgebracht wird.

31. Verfahren nach Anspruch 30, **dadurch gekennzeichnet, dass** der Sprühauftrag ohne Luftbeimengung mit einem Druck zwischen 40 bar und 100 bar unter Verwendung von Sprühdüsen (24) mit einem Durchmesser von weniger als 0,04 mm erfolgt.

32. Verfahren nach Anspruch 29, **dadurch gekennzeichnet, dass** die strukturierte Oberfläche (3) der Unterlage (2) durch Abformen der Narbenstruktür eines Naturleders hergestellt wird.

33. Verfahren nach Anspruch 29, **dadurch gekennzeichnet, dass** die strukturierte Oberfläche (3) der Unterlage (2) durch Laserbehandlung hergestellt wird.

34. Verfahren nach Anspruch 33, **dadurch gekennzeichnet, dass** die durch Laserbehandlung hergestellte strukturierte Oberfläche (3) der Unterlage (2) über eine Mutter vervielfältigt wird.

35. Verfahren nach Anspruch 29, **dadurch gekennzeichnet, dass** eine aus additionsvernetztem Silikonkautschuk bestehende Unterlage (2) mit einer Shorehärte zwischen 25 Shore A und 70 Shore A verwendet wird.

36. Verfahren nach Anspruch 30, **dadurch gekennzeichnet, dass** eine Unterlage (2) aus einem wärmeleitfähigem Silikonkautschuk mit einer Dichte von mehr als110 g/cm³ verwendet wird.

37. Verfahren nach Anspruch 36, **dadurch gekennzeichnet, dass** eine Unterlage (2) verwendet wird, in welche anorganische Füllstoffe eingebettet sind.

38. Verfahren nach Anspruch 29, **dadurch gekennzeichnet, dass** eine mit einer metallischen Abstützung (23) verbundene Unterlage (2) verwendet wird.

39. Verfahren nach Anspruch 38, **dadurch gekennzeichnet, dass** die Abstützung (23) aus einem Aluminiumblech mit einer Stärke zwischen 1 mm und 3 mm besteht.

40. Verfahren nach Anspruch 38, **dadurch gekennzeichnet, dass** die Verbindung der Unterlage (2) mit der metallischen Abstützung (23) mittels eines Einkomponenten-Silikonklebers erfolgt, in dem ein dünnes Vliesmaterial aus synthetischen Fasern mit einem Flächengewicht von weniger als 150g/m² eingebettet ist.

41. Verfahren nach Anspruch 29, **dadurch gekennzeichnet, dass** auf die Oberseite des Trägers (7) eine Kunststoffdispersion aufgebracht wird, die im wesentlichen aus einer Polyurethandispersion mit einem niedrigen Erweichungspunkt und einem Vernetzer besteht, und zwar derart, dass sie sich beim Auftreffen auf die Oberseite des Trägers (7) rasch verfestigt und eine nicht zusammenhängende Verbindungsschicht (12) entsteht.

42. Verfahren nach Anspruch 29, **dadurch gekennzeichnet, dass** auf die Oberseite des Trägers (7) eine Kunststoffdispersion aufgebracht wird, die im wesentlichen aus einer Polyurethandispersion mit einen niedrigem Erweichungspunkt und einem Vernetzer besteht, und zwar derart, dass sie sich beim Auftreffen auf die Oberseite des Trägers (7) rasch verfestigt und eine Verbindungsschicht (12) mit Schwachstellen (18) verringerter Dicke entsteht.

43. Verfahren nach Anspruch 29, **dadurch gekennzeichnet, dass** auf den auf der Unterlage (2) befindlichen, weitgehend wasserfreien, die Netzstruktur aufweisenden Film die mit der die Verbindungsschicht (12) bildenden Dispersion versehenen Oberseite des Trägers (7) aufgelegt wird, sobald diese Dispersion grifftrocken ist, aber noch Restfeuchtigkeit enthält.

44. Verfahren nach Anspruch 29, **dadurch gekennzeichnet, dass** der auf der Unterlage (2) befindliche, eine Netzstruktur aufweisende Film mit dem darauf aufgelegten, mit der die Verbindungsschicht (12) bildenden Kunststoffdispersion versehenen Träger (7) zwischen druckelastischen Platten bei einer Temperatur zwischen 60 °C und 105 °C und bei einem Druck von maximal 5 kg/cm² verpresst wird.

45. Verfahren nach Anspruch 44, **dadurch gekennzeichnet, dass** der mit der Zurichtung (1) versehene Träger (7) nach dem Verpressen in hängender Lage einer Resttrocknung unterzogen wird.

## Claims

1. A substrate (7) provided on its visible side with a finish (1) having a grain structure, with a suede type fine fiber upper side, the finish (1) consisting of a solidified polymeric dispersion and being bonded to the substrate (7) via a bonding layer (12) formed from a solidified, polyurethane-containing, crosslinked polymeric dispersion and applied to the upper side of the substrate (7), **characterized in that** the finish (1) has capillaries (11) extending through its full thickness and has essentially the same thickness (d) in the region of the grain peaks (6) and in the region of the grain valleys (8) and is bonded via a single thin bonding layer (12) to the substrate (7), wherein the finish (1) consists of a combination of a solidified polyurethane dispersion having a high softening point and comprising a crosslinker and a solidified polyurethane dispersion having a low softening point and comprising a crosslinker, which is thermoplastic before crosslinking, and may further comprise hollow microspheres having a diameter of less than 21 µm which form closed cells and/or comprise waxes and/or silicones on its visible side.

2. A substrate provided with a finish according to claim 1, **characterized in that** the substrate (7) comprises a grain leather with a polished grain side forming the upper side, a split leather with a polished upper side or a synthetic suede material with an upper side consisting of microfibers.

3. A substrate according to claim 1, **characterized in that** the capillaries (11) have different cross sections.

4. A substrate according to claim 1, **characterized in that** the capillaries (11) form an irregular distribution in the finish (1).

5. A substrate according to any one of claims 1 to 4, **characterized in that** the capillaries (11) have a diameter between 0.005 mm and 0.05 mm.

6. A substrate according to any one of claims 1 to 5, **characterized in that** the finish (1) has at least 100 capillaries (11) per an area of 100 cm².

7. A substrate according to any one of claims 1 to 5, **characterized in that** the capillaries (11) are essentially straight-line.

8. A substrate according to claim 1, **characterized in that** the bonding layer (12) has interruptions.

9. A substrate according to claim 1, **characterized in that** the bonding layer (12) has weakened positions (18) of reduced thickness.

10. A substrate according to claim 1, **characterized in that** the bonding layer (12) is merely arranged partially on the surface of the substrate (7).

11. A substrate according to claim 1, **characterized in that** the bonding layer (12) has a point-, screen- or grid-shaped or net-like texture.

12. A substrate according to claim 8, **characterized in that** the bonding layer (12) has a maximum thickness between 0.01 mm and 0.05 mm and at its weakened positions (18) a thickness between 0.002 mm and 0.01 mm.

13. A substrate according to claim 1, **characterized in that** its upper side (14) is fibrous and **in that** the bonding layer (12) is predominantly disposed in the region of the fiber tips, leaving void spaces (16) therebetween which cause a pumping effect.

14. A substrate according to claim 1, **characterized in that** the bonding layer (12) consists of a solidified polyester-polyurethane dispersion.

15. A substrate according to claim 1, **characterized in that** the polyurethane-containing dispersion has at least partly a wholly or partly crystalline structure.

16. A substrate according to claim 1, **characterized in that** the polymeric dispersion comprises tackifying additives.

17. A substrate according to claim 1, **characterized in that** the bonding layer (12) has a foam structure.

18. A substrate according to claim 1, **characterized in that** the bonding layer (12) comprises hollow microspheres having a diameter of less than 21 µm.

19. A substrate according to claim 1, **characterized in that** the bonding layer (12) has a basis weight between 20 g/m² and 90 g/m².

20. A substrate according to claim 1, **characterized in that** the finish (1) has in all cross-sectional regions approximately the same structure and the same density.

21. A substrate according to claim 1, **characterized in that** the polyurethane dispersion having a low softening point comprises a wholly or partly crystalline structure.

22. A substrate according to claim 1, **characterized in that** the finish (1) comprises hollow microspheres having a diameter of less than 21 µm which form closed cells.

23. A substrate according to claim 1, **characterized in that** the grain peaks (6) of the finish (1) comprise microscopically small smooth elevations (13).

24. A substrate according to claim 1, **characterized in that** the visible side of the finish (1) has a nubuck texture whence protrude fine hairs forming microscopically small elevations.

25. A substrate according to claim 23 or 24, **characterized in that** the elevations (13) have a diameter between 3 µm and 60 µm and a maximum length of 110 µm.

26. A substrate according to claim 1, **characterized in that** the finish (1) comprises waxes and/or silicones on its visible side.

27. A substrate according to claim 1, **characterized in that** its side (19) opposite to the upper side provided with the finish (1) is provided with a substantially roughened synthetic woven or knit (21) having protruding fibers.

28. A substrate according to claim 27, **characterized in that** the woven or knit (21) is covered by a thin coating (20).

29. A method of producing a substrate (7) provided on its visible side with a finish (1) having a grain structure, with a suede type fine fiber upper side, comprising, initially, to form the finish (1) an aqueous polymeric dispersion consisting of a combination of a polyurethane dispersion having a high softening point and comprising a crosslinker and a polyurethane dispersion having a low softening point and comprising a crosslinker, and which may further comprise hollow microspheres having a diameter of less than 21 µm which form closed cells and/or comprise waxes and/or silicones on its visible side, the latter dispersion being thermoplastic before crosslinking, being applied to a silicone rubber backing (2) which has a textured surface (3) corresponding to the grain texture of the finish (1), and being allowed to solidify as a film, a polymeric dispersion comprising a polyurethane forming a bonding layer (12) being applied to the upper side of the substrate (7), and the substrate (7) being placed with its upper side onto the film and subjected to a pressure and heat treatment, **characterized in that** the solvent-free polymeric dispersion comprising polyurethane and also a crosslinker is applied to the backing (2) having a uniform temperature of less than 105°C such that this polymeric dispersion immediately solidifies on impinging on the backing (2) and, after evaporation of water, a uniformly thick film having a net structure and a thickness of less than 0.04 mm is formed.

30. A method according to claim 29, **characterized in that** the polymeric dispersion is applied to the heated backing (2) by means of a fine mist (25) produced by spraying nozzles (24) having a small diameter.

31. A method according to claim 30, **characterized in that** the spraying is effected without air admixture at a pressure between 40 bar and 100 bar using spraying nozzles (24) having a diameter of less than 0.04 mm.

32. A method according to claim 29, **characterized in that** the structured surface (3) of the backing (2) is produced by molding off the grain structure of a natural leather.

33. A method according to claim 29, **characterized in that** the structured surface (3) of the backing (2) is produced by laser treatment.

34. A method according to claim 33, **characterized in that** the structured surface (3) of the backing (2), produced by laser treatment, is multiplied by way of a master.

35. A method according to claim 29, **characterized in that** the backing (2) consists of addition-crosslinked silicone rubber and has a Shore hardness between 25 Shore A and 70 Shore A.

36. A method according to claim 30, **characterized in that** the backing (2) is composed of a heat-conductive silicone rubber having a density of more than 110 g/cm³.

37. A method according to claim 36, **characterized in that** the backing (2) has inorganic fillers embedded in it.

38. A method according to claim 29, **characterized in that** the backing (2) is bonded to a metallic support (23).

39. A method according to claim 38, **characterized in that** the support (23) consists of an aluminum sheet between 1 mm and 3 mm in thickness.

40. A method according to claim 38, **characterized in that** the bonding of the backing (2) to the metallic support (23) is effected by means of a one-component silicone adhesive embedding a thin fleece material of synthetic fibers with a basis weight of less than 150 g/m².

41. A method according to claim 29, **characterized in that** the polymeric dispersion applied to the upper side of the substrate (7) consists essentially of a polyurethane dispersion having a low softening point and a crosslinker, such that, on impinging on the upper side of the support (7), it rapidly solidifies and forms a noncoherent bonding layer (12).

42. A method according to claim 29, **characterized in that** the polymeric dispersion applied to the upper side of the substrate (7) consists essentially of a polyurethane dispersion having a low softening point and a crosslinker, such that, on impinging on the upper side of the support (7), it rapidly solidifies and forms a bonding layer (12) having weakened positions (18) of reduced thickness.

43. A method according to claim 29, **characterized in that** the substantially water-free, net-structured film on the backing (2) has the upper side of the substrate (7), which is provided with the dispersion forming the bonding layer (12) placed on it as soon as this dispersion is dry to the touch but still contains residual moisture.

44. A method according to claim 29, **characterized in that** the film which is on the backing (2) and comprises a net structure is pressed together with the substrate (7) provided with the polymeric dispersion forming the bonding layer (12), between resilient platens at a temperature of between 60°C and 105°C and a pressure of not more than 5 kg/cm².

45. A method according to claim 44, **characterized in that**, after pressing, the substrate (7) provided with the finish (1) is subjected to residual drying in suspended condition.

## Revendications

1. Support (7) muni de son côté visible d'un fini (1) présentant une structure chagrinée et qui présente un côté supérieur fibreux en velours, ledit fini (1) étant constitué d'une dispersion plastique durcie et étant relié à une couche de liaison (12) formée d'une dispersion plastique réticulée et durcie contenant du polyuréthane qui est disposée sur le côté supérieur du support (7), **caractérisé en ce que** le fini (1) comporte des capillaires (11) continus sur toute son épaisseur et occupe sensiblement la même épaisseur (d) aussi bien dans les régions des protubérances (6) que dans les régions des creux (8) et est relié par une couche de liaison mince individuelle (12) au support (7), le fini (1) étant constitué d'une combinaison d'une dispersion de polyuréthanne durcie contenant un agent de réticulation et ayant un point de ramollissement élevé et d'une dispersion de polyuréthanne durcie contenant un agent de réticulation et ayant un point de ramollissement faible qui est thermoplastique avant la réticulation et qui peut en outre contenir des microbilles creuses d'un diamètre inférieur à 21 µm qui forment des cellules fermées et/ou qui peut comprendre des cires et/ou des silicones sur son côté visible.

2. Support muni d'un fini selon la revendication 1, **caractérisé en ce que** le support (7) est un chagrin ayant un côté gaufré poli qui forme le côté supérieur, un cuir scié ayant un côté supérieur poli ou un matériau en velours synthétique ayant un côté supérieur constitué de microfibres.

3. Support selon la revendication 1, **caractérisé en ce que** les capillaires (11) présentent des sections différentes.

4. Support selon la revendication 1, **caractérisé en ce que** les capillaires (11) sont disposés de manière irrégulière dans le fini (1).

5. Support selon les revendications 1 à 4, **caractérisé en ce que** les capillaires (11) présentent un diamètre compris entre 0,005 mm et 0,05 mm.

6. Support selon les revendications 1 à 5, **caractérisé en ce que** le fini (1) comporte au moins 100 capillaires (11) sur une surface de 100 cm².

7. Support selon les revendications 1 à 5, **caractérisé en ce que** les capillaires (11) sont sensiblement linéaires.

8. Support selon la revendication 1, **caractérisé en ce que** la couche de liaison (12) comporte des ruptures.

9. Support selon la revendication 1, **caractérisé en ce que** la couche de liaison (12) comporte des points faibles (18) d'épaisseur réduite.

10. Support selon la revendication 1, **caractérisé en ce que** la couche de liaison (12) n'est disposée que partiellement sur la surface du support (7).

11. Support selon la revendication 1, **caractérisé en ce que** la couche de liaison (12) présente une structure ponctuelle, quadrillée ou en forme de grille ou une structure de réseau.

12. Support selon la revendication 8, **caractérisé en ce que** la couche de liaison (12) présente une épaisseur maximale comprise entre 0,01 mm et 0,05 mm et au niveau de ses points faibles (18) une épaisseur comprise entre 0,002 et 0,01 mm.

13. Support selon la revendication 1, **caractérisé en ce que** son côté supérieur (14) a une structure fibreuse et **en ce que** la couche de liaison (12) est disposée en majorité dans la région des pointes des fibres de sorte que des cavités (16) exerçant un effet de pompe soient réservées entres celles-ci.

14. Support selon la revendication 1, **caractérisé en ce que** la couche de liaison (12) est constituée d'une dispersion polyester-polyuréthanne durcie.

15. Support selon la revendication 1, **caractérisé en ce que** la dispersion contenant du polyuréthanne présente au moins en partie une structure cristalline ou une structure semi-cristalline.

16. Support selon la revendication 1, **caractérisé en ce que** la dispersion plastique contient des additifs à action adhésive.

17. Support selon la revendication 1, **caractérisé en ce que** la couche de liaison (12) présente une structure de mousse.

18. Support selon la revendication 1, **caractérisé en ce que** la couche de liaison (12) contient des microbilles creuses d'un diamètre inférieur à 21 µm.

19. Support selon la revendication 1, **caractérisé en ce que** la couche de liaison (12) présente un poids superficiel compris entre 20 g/m² et 90 g/m².

20. Support selon la revendication 1, **caractérisé en ce que** le fini (1) présente approximativement la même structure et la même épaisseur dans toutes les régions de section.

21. Support selon la revendication 1, **caractérisé en ce que** la dispersion de polyuréthane est une dispersion de polyuréthane ayant un point de ramollissement faible qui présente une structure cristalline ou semi-cristalline.

22. Support selon la revendication 1, **caractérisé en ce que** le fini (1) contient des microbilles creuses d'un diamètre inférieur à 21 µm qui forment des cellules fermées.

23. Support selon la revendication 1, **caractérisé en ce que** les protubérances (6) du fini présentent de petites surélévations (13) microscopiques plates.

24. Support selon la revendication 1, **caractérisé en ce que** le côté visible du fini (1) présente une structure de nubuck de laquelle de fins poils qui forment de petites surélévations microscopiques émergents.

25. Support selon la revendication 23 ou 24, **caractérisé en ce que** les surélévations (13) présentent un diamètre compris entre 3 µm et 60 µm et une longueur maximale de 110 µm.

26. Support selon la revendication 1, **caractérisé en ce que** le fini (1) contient des cires et/ou des silicones de son côté visible.

27. Support selon la revendication 1, **caractérisé en ce qu'**un tissu ou un tricot (21) synthétique fortement lainé muni de fibres qui dépassent est prévu sur son côté opposé (19) au côté supérieur muni du fini (1).

28. Support selon la revendication 27, **caractérisé en ce que** le tissu ou le tricot (21) est couvert d'un revêtement (20) mince.

29. Procédé de fabrication d'un support (7) muni de son côté visible d'un fini (1) présentant une structure chagrinée et qui présente un côté supérieur fibreux en velours, selon lequel tout d'abord pour former le fini (1), une dispersion plastique aqueuse constituée d'une combinaison d'une dispersion de polyuréthanne contenant un agent de réticulation et ayant un point de ramollissement élevé et d'une dispersion de polyuréthanne contenant un agent de réticulation et ayant un point de ramollissement faible et qui peut en outre contenir des microbilles creuses d'un diamètre inférieur à 21 µm qui forment des cellules fermées et/ou qui peut comprendre des cires et/ou des silicones sur son côté visible, cette dernière dispersion étant thermoplastique avant la réticulation, est appliquée sur une base (2) constituée de caoutchouc de silicone qui présente une surface (3) structurée correspondant à la structure chagrinée du fini (1) et durcie pour former un film, puis une dispersion plastique contenant du polyuréthanne formant une couche de liaison (12) est appliquée sur le côté supérieur du support (7), puis le support (7) est placé avec ce côté supérieur sur le film et soumis à un traitement sous pression ou chauffage, **caractérisé en ce que** la dispersion plastique sans solvant qui contient du polyuréthanne et un agent de réticulation est appliquée sur une base (2) présentant une température homogène inférieure à 105 °C de sorte que cette dispersion plastique se solidifie dès qu'elle rencontre la base (2) et forme après évaporation de l'eau un film d'une épaisseur homogène inférieure à 0,04 mm qui présente une structure en réseau.

30. Procédé selon la revendication 29, **caractérisé en ce que** la dispersion plastique est appliquée sur la base (2) chauffée au moyen d'une fine brume (25) produite par des buses de pulvérisation (24) présentant un petit diamètre.

31. Procédé selon la revendication 30, **caractérisé en ce que** l'application de la pulvérisation est réalisée sans addition d'air avec une pression comprise entre 40 bars et 100 bars en utilisant des buses de pulvérisation (24) d'un diamètre inférieur à 0,04 mm.

32. Procédé selon la revendication 29, **caractérisé en ce que** la surface structurée (3) de la base (2) est fabriquée en reproduisant la structure chagrinée d'un cuir naturel.

33. Procédé selon la revendication 29, **caractérisé en ce que** la surface structurée (3) de la base (2) est fabriquée par traitement laser.

34. Procédé selon la revendication 33, **caractérisé en ce que** la surface structurée (3) de la base (2) fabriquée par traitement laser est reproduite au moyen d'un écrou.

35. Procédé selon la revendication 29, **caractérisé en ce qu'**une base (2) constituée de caoutchouc de silicone réticulé par addition ayant une dureté de Shore comprise entre 25 Shore A et 70 Shore A est utilisée.

36. Procédé selon la revendication 30, **caractérisé en ce qu'**une base (2) constituée d'un caoutchouc de silicone conducteur de chaleur d'une densité supérieure à 110 g/cm³ est utilisée.

37. Procédé selon la revendication 36, **caractérisé en ce qu'**une base (2) dans laquelle des charges inorganiques sont incorporées est utilisée.

38. Procédé selon la revendication 29, **caractérisé en ce qu'**une base (2) reliée à un support métallique (23) est utilisée.

39. Procédé selon la revendication 38, **caractérisé en ce que** le support (23) est constitué d'une plaque d'aluminium d'une épaisseur comprise entre 1 mm et 3 mm.

40. Procédé selon la revendication 38, **caractérisé en ce que** la liaison entre la base (2) et le support métallique (23) est réalisée par une colle monocomposante à base de silicone dans laquelle un matériau non tissé fin à base de fibres synthétiques d'un poids superficiel inférieur à 150 g/m² est incorporé.

41. Procédé selon la revendication 29, **caractérisé en ce qu'**une dispersion plastique est appliquée sur le côté supérieur du support (7), ladite dispersion plastique étant essentiellement constituée d'une dispersion de polyuréthane ayant un point de ramollissement faible et d'un agent de réticulation, d'une manière telle qu'elle se solidifie rapidement lors de sa rencontre avec le côté supérieur du support (7) et forme une couche de liaison (12) non cohérente.

42. Procédé selon la revendication 29, **caractérisé en ce qu'**une dispersion plastique est appliquée sur le côté supérieur du support (7), ladite dispersion plastique étant essentiellement constituée d'une dispersion de polyuréthane ayant un point de ramollissement faible et d'un agent de réticulation, d'une manière telle qu'elle se solidifie rapidement lors de sa rencontre avec le côté supérieur du support (7) et forme une couche de liaison (12) ayant des points faibles (18) d'épaisseur réduite.

43. Procédé selon la revendication 29, **caractérisé en ce que** le côté supérieur du support (7) muni de la dispersion qui forme la couche de liaison (12) est placé sur le film présentant la structure en réseau, essentiellement sans eau, qui se trouve sur la base (2) dès que cette dispersion est sèche au toucher mais contient encore une humidité résiduelle.

44. Procédé selon la revendication 29, **caractérisé en ce que** le film présentant une structure en réseau, qui se trouve sur la base (2), est pressé avec le support (7) muni de la dispersion plastique qui forme la couche de liaison (12) placé sur celui-ci entre des plaques élastiques à la pression à une température comprise entre 60 °C et 105 °C et à une pression d'au plus 5 kg/cm².

45. Procédé selon la revendication 44, **caractérisé en ce que** le support (7) muni du fini (1) est soumis à un séchage résiduel en position suspendue après la pression.
